# EUROPEAN PATENT SPECIFICATION

(11) **EP 2 749 039 B1**
(45) Date of publication and mention of the grant of the patent: **26.09.2018**
(21) Application number: 12825147.7
(22) Date of filing: 23.08.2012
(51) Int. Cl.: H04N 21/432, H04N 21/4405, H04N 21/462, H04N 21/482

(54) **ELECTRONIC PROGRAM GUIDE FOR SELECTING CONTENT RECEIVED BY A TUNER**
ELEKTRONISCHER PROGRAMMFÜHRER ZUR AUSWAHL VON DURCH EINEN TUNER EMPFANGENEM INHALT
GUIDE DE PROGRAMME ÉLECTRONIQUE POUR SÉLECTIONNER UN CONTENU REÇU PAR UN TUNER

(30) Priority: 23.08.2011 US 201161526386 P; 23.08.2011 US 201161526506 P; 23.08.2011 US 201161526565 P; 02.11.2011 US 201113288002; 08.11.2011 US 201113292047; 13.12.2011 US 201113324831
(43) Date of publication of application: 02.07.2014
(73) Proprietor: EchoStar Technologies L.L.C., Englewood, CO 80112 (US)
(72) Inventor: KIRBY, Morgan Haden, Palmer Lake, Colorado 80133 (US); SWANSON, Kristen Leigh, Denver, Colorado 80220 (US); TAXIER, Karen, Highlands Ranch, Colorado 80129 (US); MARTEN, Neil Thomas, Denver, Colorado 80212 (US); VANDUYN, Luke, Highlands Ranch, Colorado 80126 (US); NGUYEN, Tony, Aurora, Colorado 80016 (US); MARTCH, Henry Gregg, Parker, Colorado 80138 (US); GRATTON, Max S., Lakewood, Colorado 80228 (US)
(74) Representative: Reeve, Nicholas Edward
(86) International application number: PCT/US2012/052002
(87) International publication number: WO 2013/028829

(56) References cited:
- EP-A1- 2 317 767
- WO-A1-98/12872
- WO-A2-2007/047410
- US-A- 4 706 121
- US-A- 5 335 277
- US-A1- 2002 055 343
- US-A1- 2002 188 943
- US-A1- 2007 154 163
- US-A1- 2007 157 248
- US-A1- 2007 204 288
- US-A1- 2008 152 039
- US-A1- 2009 260 038
- US-A1- 2010 313 222
- US-B1- 7 487 529
- Anonymous: "The Angry Technician's Guide to streaming Freeview via VLC, you Idiots | The Angry Technician", , 24 June 2010 (2010-06-24), XP055388589, Retrieved from the Internet: URL:https://angrytechnician.wordpress.com/ 2010/06/24/the-angry-technicians-guide-to- streaming-freeview-via-vlc-you-idiots/ [retrieved on 2017-07-06]
- Anonymous: "Documentation:Playback - VideoLAN Wiki", , 25 December 2010 (2010-12-25), XP055388595, Retrieved from the Internet: URL:https://wiki.videolan.org/index.php?ti tle=Documentation:Playback&oldid=18460 [retrieved on 2017-07-06]
- Anonymous: "How To Watch DVB-T With VLC Media Player", , 25 January 2009 (2009-01-25), XP055388602, Retrieved from the Internet: URL:http://www.izitips.com/software/how-to -watch-dvb-t-with-vlc-media-player/ [retrieved on 2017-07-06]
- Anonymous: "News - VideoLAN", , 15 July 2011 (2011-07-15), XP055388604, Retrieved from the Internet: URL:http://www.videolan.org/news.html#news -2011-07-15 [retrieved on 2017-07-06]

## Description

### FIELD OF THE INVENTION

The present application relates generally to grouping, transmitting, storing, and providing access to information. More particularly, the present application relates to grouping transmitting, storing, and providing access to audiovisual content based on selected television channels and selected times. Still more particularly, the present application relates to providing a user interface for accessing the audiovisual content.

Furthermore, the present application relates to utilizing content receivers to provide on screen display content such as electronic programming guides that combine stored content service features with other on screen display content such as content provider schedule information.

Additionally, audio/visual recorders for broadcast content, e.g., television shows, may include a digital video disc burner or digital video recorder. These recorders may be programmed to record various broadcast content and store the content as the content is broadcast. These recorders may not provide a way to link content together or present content in an order other than the order it was recorded.

### BACKGROUND

US 2007/157248 A1 discloses an interactive media guidance application that provides channel groups. Channel groups may be organized around a common characteristic.

WO 2007/047410 A2 discloses systems and methods for simultaneously recording multiple programs using a single tuner. A content source generates a digital transport multiplex having multiple programs.

EP 2317767 A1 discloses a method for accessing services by a user unit. Each service is simultaneously broadcast and contains audio/video data and at least one service defining a product. The data of each product is encrypted by a plurality of control words.

WO 98/12872 A1 discloses an interactive computer system providing television schedule information and which displays action pop-up listing actions which can be scheduled.

US 2007/154163 A1 discloses a method for presenting episodes of a series for a user, including receiving an indication of interest in episodes of a series from the user and organizing the episodes of the series in the order in which they were originally made available.

### SUMMARY

According to a first aspect of the invention, there is provided a method of providing access to a block of content, comprising: determining, utilizing a content receiver, a plurality of instances of content received over different television channels, and being received simultaneously by a tuner from a same frequency band of a content provider, wherein the plurality of instances of content are scrambled in association with a single control word; presenting an electronic programming guide (EPG) that presents a grid of a plurality of television channels, a plurality of times, and a plurality of television programs appearing on the plurality of television channels at the plurality of times; receiving input at the content receiver from a user accessing an interactive feature presented within the EPG to display a block list, the interactive feature being provided based on the input highlighting or scrolling across a television channel of the plurality of television channels presented on the grid of the EPG; in response to receiving input at the content receiver from the user accessing the interactive feature presented within the EPG, outputting the block list from the content receiver for presentation by a presentation device; receiving, at the content receiver, a selection from a user of a first one of the plurality of instances of content; and outputting the first one of the plurality of instances of content from the content receiver to the presentation device in response to the selection; wherein the block list identifies the other instances of content from the plurality of instances of content being received simultaneously by the tuner on the same frequency band.

According to a second aspect of the invention, there is provided a method for providing access to content, the method comprising: determining, utilizing a content receiver, a plurality of instances of content received over different television channels, and being received simultaneously by a tuner from a same frequency band of a content provider broadcast or a plurality of instances of stored content received over different television channels that were received simultaneously by the tuner from the same frequency band of the content provider broadcast, wherein the plurality of instances of content are scrambled in association with a single control word; presenting an electronic programming guide (EPG) that presents a grid of a plurality of television channels, a plurality of times, and a plurality of television programs appearing on the plurality of television channels at the plurality of times; receiving input at the content receiver from a user accessing an interactive feature presented within the EPG to display a block list, the interactive feature being provided based on the input highlighting or scrolling across a television channel of the plurality of television channels presented on the grid of the EPG; in response to receiving input at the content receiver from the user accessing the interactive feature presented within the EPG, outputting the block list from the content receiver for presentation by a presentation device; receiving at the content receiver a selection from a user input of a first one of the plurality of instances of content; determining if the instance of content is available live or from a stored state; transmitting the instance of content being received by the tuner to the presentation device live if the program is available live; and accessing the instance of content from the plurality of instances of stored content if the program is not available live and transmitting the accessed instance of content to the presentation device; wherein the block list identifies the other instances of content from the plurality of instances of content being received simultaneously by the tuner on the same frequency band or that were received simultaneously by the tuner on the same frequency band and stored.

According to a third aspect of the invention, there is provided a system for providing access to content, the system comprising: at least one content receiver, comprising: at least one processing unit that: determines a plurality of instances of content received over different television channels, and being received simultaneously by a tuner from a same frequency band of a content provider, wherein the plurality of instances of content are scrambled in association with a single control word, outputs for presentation an electronic programming guide (EPG) that presents a grid of a plurality of television channels, a plurality of times, and a plurality of television programs appearing on the plurality of television channels at the plurality of times; receives input at the content receiver from a user accessing an interactive feature presented within the EPG to display a block list, the interactive feature being provided based on the input highlighting or scrolling across a television channel of the plurality of television channels presented on the grid of the EPG; in response to receiving input at the content receiver from the user accessing the interactive feature presented within the EPG, generates the block list, and transmits the block list from the content receiver to a presentation device for presentation; receives at the content receiver a selection from a user input of a first one of the plurality of instances of content; transmits the first one of the plurality of instances of content from the content receiver to the presentation device in response to the selection; and wherein the block list identifies the other instances of content from the plurality of instances of content being received simultaneously by the tuner on the same frequency band.

It is to be understood that both the foregoing general description and the following detailed description are for purposes of example and explanation and do not necessarily limit the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE DRAWINGS

Figure 1 is a schematic diagram of a system according to some implementations.
Figure 2 is a diagram of another system including portions of the system according to FIG. 1.
Figure 3 is a diagram of an electronic program guide showing an option for accessing a block guide, according to some implementations.
Figure 4 is a diagram of an electronic program guide showing another option for accessing a block guide, according to another implementation.
Figure 5 is a diagram of an electronic program guide showing another option for accessing a block guide, according to another implementation.
Figure 6 is a diagram of a block guide according to some implementations.
Figure 7 is a diagram of the block guide of FIG. 6 with a highlighted block guide bar
Figure 8 is a diagram of an additional block guide.
Figure 9 is a block diagram illustrating a system for providing on screen display content that includes stored content service features.
Figure 10A is a flow chart illustrating a method for providing electronic programming guides that combine stored content service features with content provider schedule information. This method may be performed by the system of FIG. 9.
Figure 10B is a flow chart illustrating a method for providing on screen display content that includes stored content service features. This method may be performed by the system of FIG. 9.
Figures 11A-11D are diagrams illustrating on screen display content that may be provided by the system of FIG. 9.
Figure 12 is a block diagram illustrating a system for providing electronic programming guides that combine stored content information with content provider schedule information.
Figure 13 is a diagram illustrating a first example of an electronic programming guide that may be provided by the system of FIG. 1.
Figure 14 is a flow chart illustrating a method of grouping and recording content.
Figure 15 is a flow chart illustrating a method of presenting related content.

### DETAILED DESCRIPTION

The description that follows includes sample systems, methods, and computer program products that embody various elements of the present disclosure. However, it should be understood that the described disclosure may be practiced in a variety of forms in addition to those described herein.

Content receivers (such as set top boxes, television receivers, digital video recorders, and so on) generally receive content from one or more programming providers (such as satellite television programming providers, cable television programming providers, Internet service providers, video on demand providers, pay-per-view movie providers, and so on) via one of more communication connections (such as satellite communication connections, coaxial cable communication connections, Internet communication connections, radio-frequency connections, and so on). Such content receivers may transmit such received content to one or more presentation devices and/or store the received content for later presentation.

When a user is viewing content previously stored on the content receiver, the user may wish to view the content according to a specific group. For example, the user may wish to view content recordings in the order that the content was originally presented. This may include a variety of different content selections that may have been originally presented on a single channel during a particular time frame. In one example, a user may wish to view all of the content originally broadcast during a primetime channel slot, on a particular channel. Current digital video recorders (DVRs) may store content by its name. Therefore, if a user wished to watch all of the content presented on a particular channel from the time of 7pm to 10pm, he or she would have to select each specific content (by varying names) in order to cause the DVR to present the content. Similarly, DVRs may store content based on the name and the originally broadcast date. For example, a user may wish to record content that may be a rerun of previously aired content that may be displayed on multiple channels in a random or non-chronological order. The DVR may be configured to record each content. However, the user may wish to view the content by original episode number (rather than recorded or broadcast date).

The present disclosure discloses systems and methods for grouping, recording, and/or presenting content. The content (e.g., television shows) may be grouped together based on the originally broadcast time, date, and/or channel, or based on an episode number, title, descriptor, or the like. As the content may be grouped, a user may select multiple different content to be displayed continuously. For example, the user may wish to view the content chronologically as it was originally aired on a particular channel and the content receiver may display the content in the particular order it was originally aired. In this example, content may be arranged to be displayed after one another, based on the original airing sequence, e.g., content that aired at 7pm may be presented prior to content that aired at 7:30pm, and so on.

In another example, the grouping or relationship may be related to an episode and/or title of a particular content. When a user selects a particular content to watch, the content may be presented based on an episode number, which may be out of order from how the content was originally recorded. For example, syndicated content may broadcast different episodes of a particular content series out of episode order. Therefore, by presenting the content based on an episode (or title) order, a user may watch all of the episodes for a particular show episodically, although the show may not have been recorded in that manner.

Users of content receivers may desire to access different instances of content that are broadcast simultaneously and/or substantially contemporaneously by content providers. For example, many television programming viewers wish to watch different television programs that occupy the same broadcast time slot, such as the different television programs associated with the major television programs that are broadcast between seven PM and ten PM mountain time. Content receivers may attempt to address this issue by utilizing multiple tuners that can each separately present and/or record different, simultaneously broadcast instances of content. However, a separate tuner may still be required for each simultaneous or substantially contemporaneous instance of broadcast or otherwise received content that a content receiver user wishes to view and/or record. Further, in addition to separate tuners required for each instance of content, the content receiver may require sufficient resources to descramble and store each of the instances of content desired by the user.

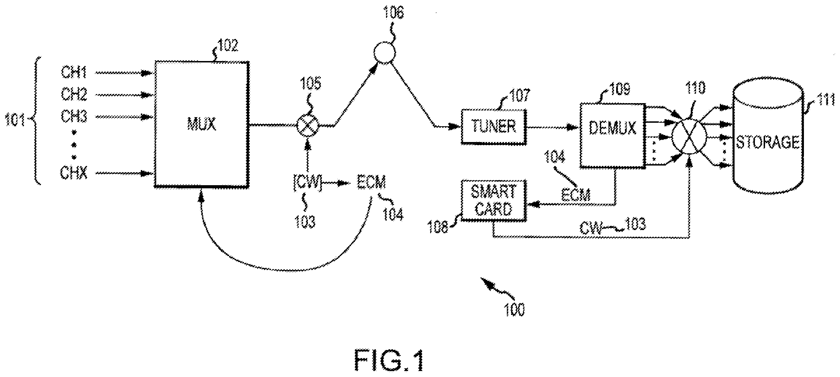

FIG. 1 is a block diagram illustrating a system 100 for automatically recording multiple instances of content from one or more programming providers. The automatic recording of multiple instances of content provided by the system 100 may enable users of content receivers to access different instances of content that are broadcast simultaneously and/or substantially contemporaneously by content providers.

In various broadcast systems, content providers may broadcast content to a plurality of different content receivers via one or more frequency bands utilizing one or more satellites. Each multiplexed signal contained in the frequency band (sometimes referred to as a transponder) may be configured to include data related to one or more instances of content, such as one or more television programming channels. The data related to each of the programs may include multiple PIDs (packet identifiers), such as a video PID and one or more audio PIDs for a particular instance of content. The data related to each of the instances of content included in each frequency may be scrambled utilizing one or more CWs (control words), which may then be encrypted to generate one or more ECMs (entitlement control messages) which may in turn be included with the data. A content receiver may typically tune to one or more of the frequency bands to receive the multiplexed signal that contains data for a particular programming channel utilizing one or more tuners. The content receiver may process only a subset of the programming channels by keeping the data associated with the particular programming channel and discarding data received via the tuned frequency band and multiplexed signal associated with other programming channels, such as by utilizing a PID filter to keep data identified by PIDs related to the particular programming channel and discard data identified by PIDs not related to that particular programming channel. The content receiver may decrypt the ECM included with the data associated with the particular programming channel to obtain the CW, descramble the data utilizing the CW, and store and/or transmit the data (e.g., decompressed, reconstructed audio and video data) to one or more presentation devices.

As illustrated in FIG. 1, in this implementation, one or more content providers may select multiple instances of content 101 to be automatically recorded such as by utilizing predefined recording parameters. For example, a content provider may select all of the television events defined as "primetime events" associated with all channels defined as "primetime television channels" for a particular period of time defined as "prime time" to be automatically recorded. In other examples, the content provider may select television events associated with programming channels for a particular time period (such as a half hour, multiple hours, and/or an entire programming day) in response to user selections. After the content provider selects the multiple instances of content, the multiple instances of content may be multiplexed utilizing a multiplexer 102. The multiplexed signal (which includes the multiplexed selected multiple instances of content) may then be scrambled by a scrambler 105 utilizing one or more CWs 103. The CW may be encrypted to generate an ECM by an ECM generator which may take the CW as an input (and may also include other information such as access criteria) and outputs the ECM, which may be included with the multiplexed signal. The scrambled multiplexed signal may then be included in a broadcast on a frequency band (e.g., cable, satellite), which may then be transmitted to one or more satellites 106 for broadcast. The satellite 106 may receive the frequency band (uplink frequency band) and then broadcast the multiplexed signal to a number of content receivers on a translated frequency band (downlink frequency band), such as a content receiver that includes a tuner 107.

The tuner 107 may tune to the frequency band that includes the multiple instances of content (which may be performed in response to one or more recording instructions received by the content receiver that includes the tuner from the content provider). The data received via the tuned frequency (which may be filtered by a PID filter, not shown) may be demultiplexed by a demultiplexer 109 and then descrambled by a descrambler 110 utilizing the CW before being stored in a non-transitory storage medium 111 (which may take the form of, but is not limited to, a magnetic storage medium; optical storage medium; magneto-optical storage medium; read only memory; random access memory; erasable programmable memory; flash memory; and so on) based on recording parameters, such as predefined recording parameters. The demultiplexer 109 may obtain the included ECM 104, and the ECM may be provided to a smart card 108 that may decrypt the ECM 104 to obtain the CW 103 for the descrambler 110. Hence, the multiple instances of content may subsequently all be available to a user of the content receiver (until such time as they are removed from the non-transitory storage medium) without requiring multiple tuners to receive each of the multiple instances of content, without requiring the smart card to decrypt multiple ECMs. In some implementations, the multiple instances of content may be stored in a single file.

In at least one embodiment, the tuner 107 may receive multiple instances of content which may be simultaneously recorded and/or watched by one or more users. For example, in one embodiment, the tuner 107 may operate to receive instances of content (e.g., multiple television channels or multiple programs) multiplexed together on single tuned frequency. Furthermore, in at least one embodiment, each of the multiple instances of content may be encrypted using a single control word. As described above, the multiple instances of content may be received, decrypted and/or stored onto the storage medium 111. Simultaneously, a user may request to view one or/more of the received programs. A receiver may demodulate and output the signal to a presentation device for presentation to a user. In association with reception of the content, the receiver performs appropriate processing to select portions of the received plurality of content associated with the selected channel for further processing and output.

In at least one embodiment, a single tuner 107 and smart card 108 may be utilized to receive, process and output multiple instances of content to multiple devices simultaneously. For example, the tuner 107 may simultaneously receive content associated with the big four tv networks (CBS, NBC, ABC, Fox) which are encrypted using the same control word and multiplexed into the same tuned frequency. The smart card 108 performs processing for simultaneously decrypting a plurality of the channels and the decrypted signals may be output to multiple presentation devices, either using the same output device (e.g., one set-top box with multiple outputs) or via multiple output devices which are communicatively coupled over a network or other communication link (e.g., multiple set-top boxes).

Although the system 100 is illustrated in FIG. 1 and is described above as including a number of specific components configured in a specific arrangement, it is understood that this is for the purposes of example and other arrangements involving fewer and/or additional components are possible without departing from the scope of the present disclosure. For example, in various implementations, the multiple instances of content may be individually scrambled utilizing the CW prior to multiplexing. In another example, in some implementations, the data received via the tuned frequency may be descrambled utilizing the CW before being demultiplexed.

In some implementations of the system of FIG. 1, multiple instances of content may be recorded simultaneously from a single transponder and stored in the non-transitory storage medium 111 of the content receiver as a single file of multiple recorded instances of content. Upon playing of one instance of content from the single file of the multiple recorded instances of content, the content receiver may read the file incrementally so as to play the one instance of content while filtering out the other file contents (e.g., the other instance of content within the file).

The multiple instances of content have been described in the context of primetime television and thus the multiple instances of content have been described as relating to content available on selected popular network television channels during a particular period of the day. In other implementations, the multiple instances of content may be related to otherwise related channels. That is, rather than primetime channels, the multiple instances of content may include a group of selected sports channels, decorating channels, shopping channels, cartoon channels, cooking channels, or other groups of channel related by subject matter and may further include a time period within which these channels are commonly watched. For example, multiple instances of content may include a group of morning talk shows and may cover a time period from approximately 7:00 am to 10:00 am. Other groups may include afternoon talk shows, soaps, or news broadcasts. Other multiple instances of content may include groups of channels selected based on demographics of a group of users, for example. That is, where a study is performed suggesting that a particular group of users watches a particular set of channels in a particular time period each day, the particular channels within that time period may define multiple instances of content.

The multiple instances of content may also include information and/or data and may thus not be limited to television programming or audiovisual content, for that matter. For example, a bundle of data or a bundle of groups of data may also be processed as described above. Where a single CW is used for the several groups of data, the several channels, or other instances of content or information, large volumes of data and/or content may be transmitted without requiring multiple tuners to receive each of the multiple instances of content, without requiring the smart card to decrypt multiple ECMs, and/or without requiring the combiner 109 to have to descramble multiple signals. Accordingly, while the remaining portion of the application may include reference to primetime television and thus be focused on a particular set of channels for a particular period of time, other groups of content may also be provided and the methods, menus, and systems for accessing the content may be reflective of the type of content or information stored.

Electronic programming guides (EPG) generated by content receivers generally include a collection of programming details identifying instances of content for the various programming channels supported by the content stream. The EPG may be a grid or table of timeframes (x-axis) and programming channels (y-axis) and blocks within the grid with programming information identifying instances of content (such as show titles for television shows). The programming information may generally be alpha-numeric symbols identifying the instances of content. When the user desires to view past, present or future programming information, the user generally enters a selection from a controller (such as a remote control) that generates a command for the content receiver to transmit the EPG to the content display device. The user may scroll through the grid of programming information and select an instance of content of interest. For example, the content receiver may transmit an image of a cursor or a highlighted overlay (e.g., having a different color or shade compared to the EPG background) that may be used as a navigation and selection tool. Navigating to a block showing the programming information enables the user to select the block, and depending on the type of selection entered, the content receiver generally takes some action. For example, the content receiver may change the channel to the instance of content associated with the programming information identified in the EPG, transmit programming details on the instance of content (such as date, time, duration, synopsis, and the like) to the content display device, transmit a confirmation about the user's selection, such as a confirmation that the selected programming event is to be recorded, and so on.

However, in view of the functionality of the system of FIG. 1 in which multiple instances of content are recorded simultaneously and stored in the non-transitory storage medium 111 of the content receiver, there is a need to provide on screen display content such as an EPG that highlights the information on the stored content service feature described above in which multiple instances of content are available for recording, have been recorded and are available for viewing, or both.

Accordingly, the present disclosure discloses systems and methods for providing on screen display content such as an EPG or otherwise that includes information on the stored content service feature. When provided in connection with an EPG, the information on the stored content service feature is incorporated with content provider scheduling information. For example, the EPG may include information on the stored content service feature that directs the user to previously recorded instances of content, that notifies the user that upcoming instances of content that are to be recorded for specified channels during a timeframe and/or that instructs or informs the user about the availability to enroll the user's account to cause the content receiver to implement the stored content service feature. When provided in connection with other on screen display content, the information on the stored content service feature may be provided as an overlay to video content or to other on screen display content.

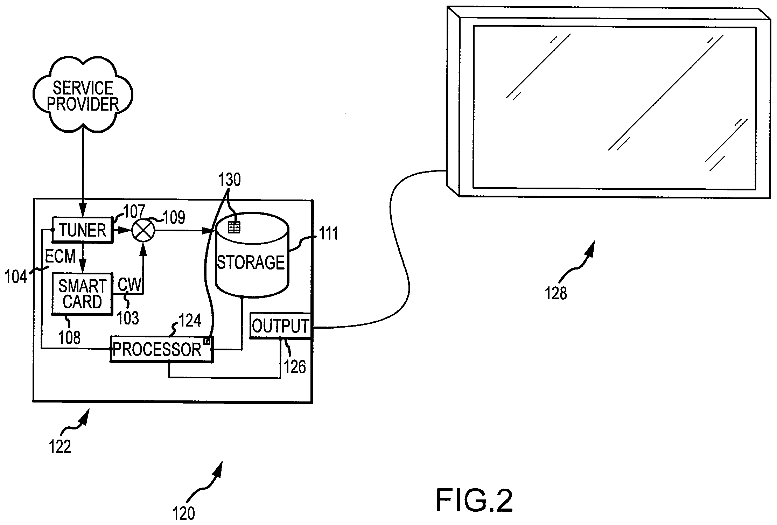

Referring now to FIG. 2 a system 120 for accessing and displaying the multiple instances of content may be described. The system 120 may include some parts of the system 100 shown in FIG. 1 as part of a content receiver 122. The content receiver 122 may further include a processor 124 and an output 126. The system 120 may also include a presentation device 128 connected to the output 126 of the content receiver 122. The content receiver 122 may be configured for performing the storage function of the system of FIG. 1 and may also be configured for processing information from the service provider and/or processing data stored in the storage medium 111. The content receiver 122 may also be configured for interfacing with a user to receive commands or instructions. As such, the content receiver 122 may include an interfacing module 130 for processing menu related data, for example. The interfacing module 130 may receive menu data from a service provider or read the data from the storage medium 111. The interfacing module 130 may send menus to the presentation device for display and may receive input from the user via a remote control used by the user in conjunction with the menu. The interfacing module 130 may adjust, change, or adapt the displayed menu based a users selections and/or predefined preferences. Upon selection of content, the content receiver 122 may also send selected content or other content to the presentation device for display. The presentation device 128 may be configured for receiving the content or information from the content receiver 122 and displaying the content or information for viewing and/or interaction by the user.

The interfacing module 130 may include software, hardware, or a combination of software and hardware configured for interfacing with the user. In some implementations, the interfacing module 130 may include computer-implemented instructions stored on the computer readable storage medium 111 in the content receiver 122, for example. The computer-implemented instructions may be for displaying particular menus and waiting for user input relating to the menus and either displaying an additional menu or prompting the user based on user input or accessing the content selected by the user. The interfacing module 130 may also include databases, tables, or otherwise arranged files for storing information for populating the menus. The databases, tables, or otherwise arranged files may be updated periodically with additional information relating to current programming availability.

Although the content receiver 122 is illustrated and described above as including the tuner 107 and the storage 111, it is understood that other arrangements are possible without departing from the scope of the present disclosure. For example, in various implementations the tuner 107 and/or the storage 111 may be components of another content receiver (not shown) with which the content receiver 122 is configured to communicate. As such, the content receiver 122 may be operable to communicate with the other content receiver in order to access and/or present content received and/or stored by the other content receiver. In such cases, the content receiver 122 may not include a tuner and/or storage similar to the tuner 107 and the storage 111.

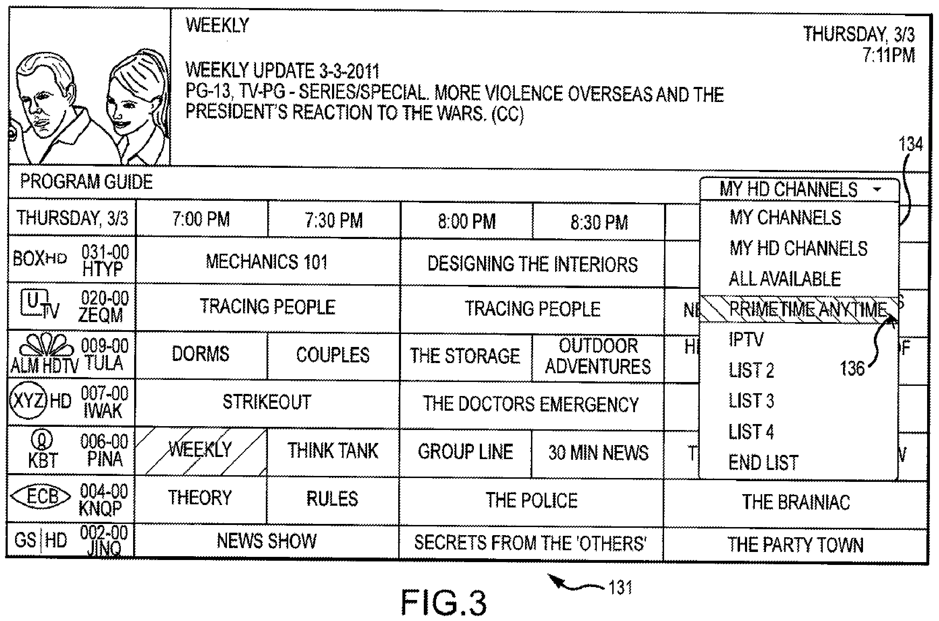

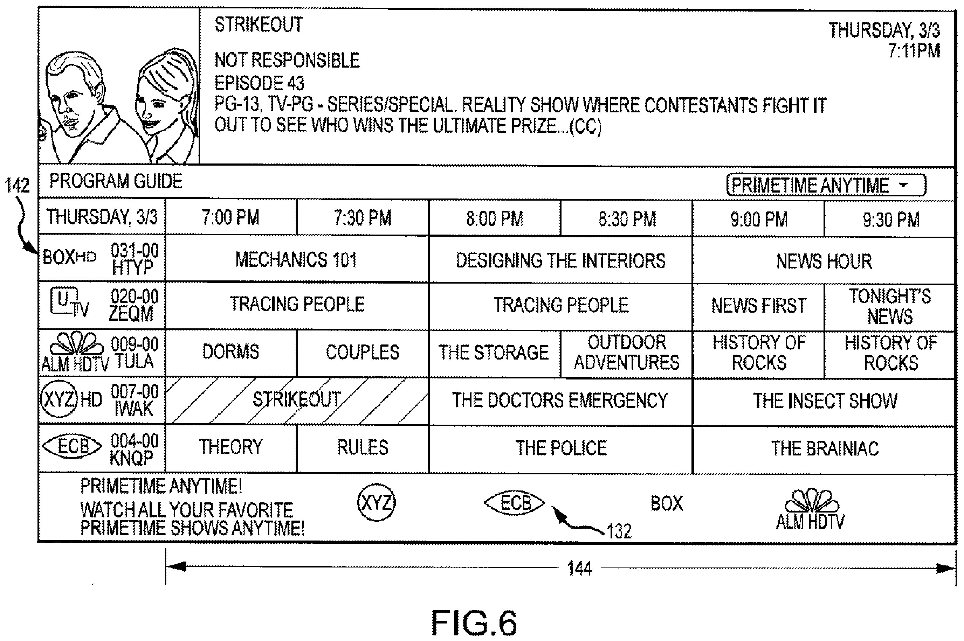

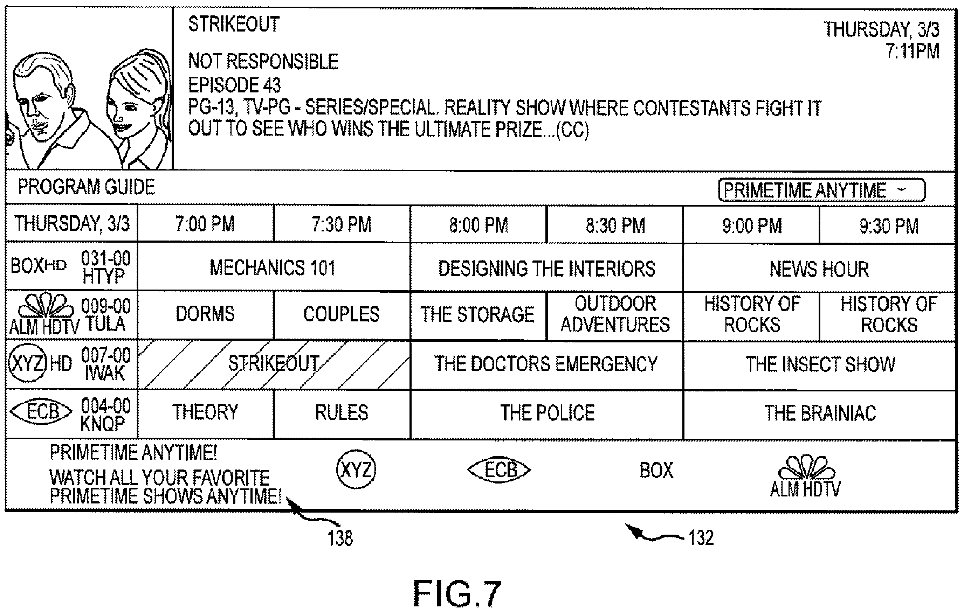

Referring now to FIGS. 3-7, a series of selection of menus are shown. Where a block of content, or series of blocks of content, is received and processed as described with respect to FIG. 1, the block of content may be accessible live or from a stored state by a user via one or more dedicated interfaces. That is, an interface may be provided that is particularly adapted for displaying selection options relating to the content being streamed to or stored in the block. In the context of television programming, the dedicated interface may be in the form of a dedicated electronic programming guide (EPG) or block guide 132 (though in some cases a block list may be presented that is not configured as a block guide or other kind of dedicated programming guide). In one implementation, the block guide 132 may include one or more menu screens relating to primetime television and, as such, may include one or more menu screens relating to programming content on, for example, ABC, CBS, NBC, and FOX, from seven PM to ten PM as shown in FIGS. 6 and 7. Other networks, time frames, and other groupings of shows may also be provided. Programming that aired on different days or weeks may also be accessible within the block guide 132. For example, previous episodes of a program may be accessible. This dedicated EPG or block guide 132 may be compiled in one more ways, it may be accessible in one or more ways, and it may include one or more menu screens for accessing content in the block or in related blocks.

In some implementations, the block guide 132 may be a condensed or alternative version of an associated or general EPG usable by a user to access programs outside the block of content. As such, in some implementations, the block guide 132 may be developed by accessing the general EPG and extracting or displaying portions of the general EPG. This process may be performed by, for example, a content receiver 122 or this process may be performed by a service provider. In other implementations, the block guide 132 may be developed wholly separate from the general EPG, but the block guide 132 may still have some overlapping information with the general EPG. The block guide 132, in this implementation, may be developed by a service provider, for example, and transmitted with, or separate, from the block of content. In any of the above cases, the block guide 132 may be stored at a content receiver 122 and a user may access the block guide 132 in several ways.

Referring now to FIG. 3, a view of a general EPG 131 is shown where options are included for a user to select content including content within or outside the block of content. As shown, the general EPG 131 may include a drop down menu 134 allowing a user to select the format in which they would like to have their program options displayed. The drop down menu 134 may include a block guide option 136. The user may scroll to the block guide option 136 and select the block guide option 136 and the system may present a block guide 132 such as one of those shown in FIGS. 6 and 7, for example. It is noted that other selection options may be provided other than a drop down menu 134. A list menu, a radio button menu, a series of push buttons, or other interface menu options may also be provided.

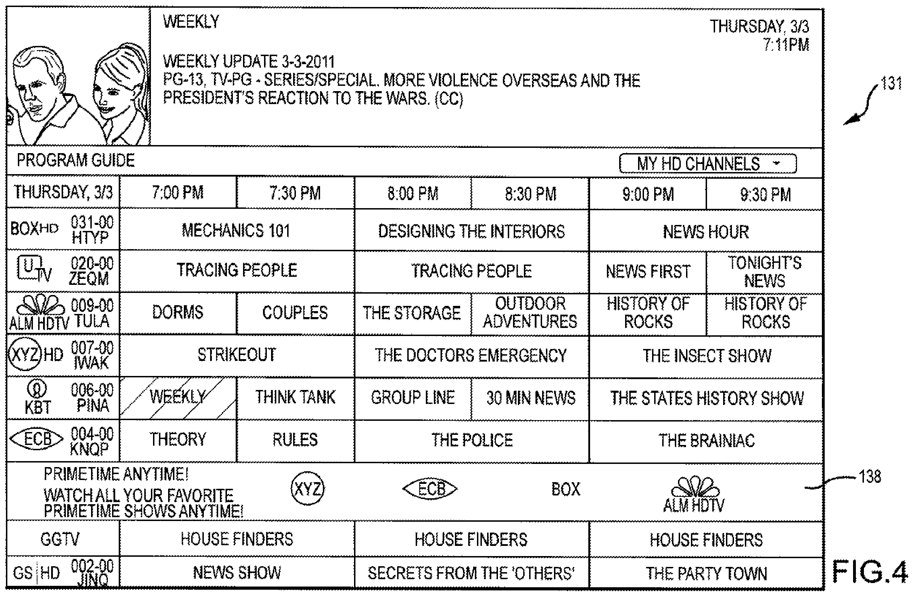

Referring now to FIG. 4, another view of a general EPG 131 is shown. As with FIG. 3, this general EPG 131 may be arranged to show a series of television channels and the programs available on those channels for several time ranges. As shown, this general EPG 131 may include a channel option in the form of a block guide bar 138. The block guide bar 138 may be arranged between any of the channel selections and it may extend across the whole of the time ranges available. In some implementations, the block guide bar 138 may be arranged near or within the series of channels available in the block guide 132. That is, as shown, block guide bar 138 may be arranged adjacent to the CBS network channel selection, for example. Other locations may be provided and may be selected such that the user can associate the block guide bar 138 with channels available in the block guide 132 or such that the user can at least view the block guide bar 138 when viewing programming options available on channels associated with the block guide 132.

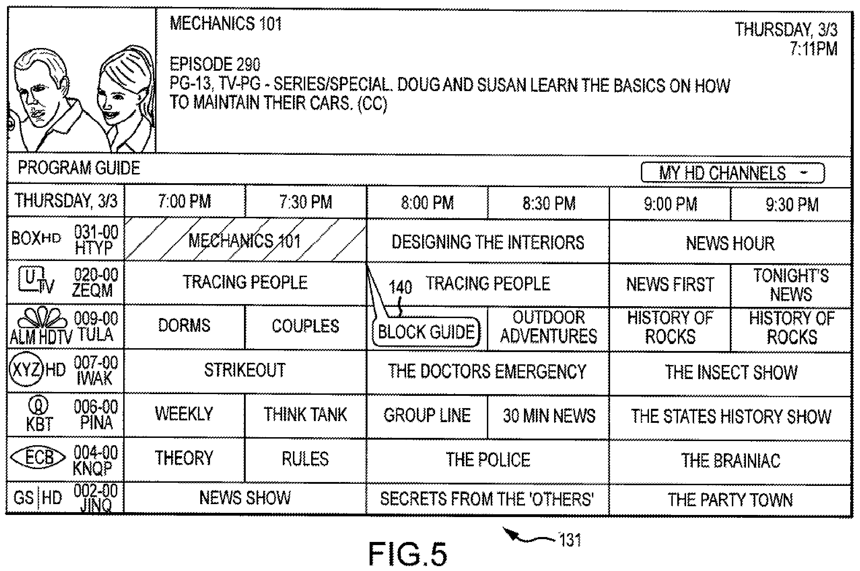

Referring now to FIG. 5, still another view of a general EPG 131 is shown. In this implementation, an interactive feature may be provided allowing the user to access the block guide 132. As shown, the interactive feature may include a pop-up selection 140. The pop-up selection 140 may be triggered when a user highlights, scrolls across, or otherwise preliminarily selects a selection option on one of the channels included in the EPG 131. For example, as shown, a user has highlighted a program on FOX at seven PM. Upon highlighting the program, the general EPG 131 may present a pop-up 140 asking or suggesting that the user use the block guide 132. The pop-up 140 may read "primetime anytime" for example. The pop-up 140 may be triggered when the user scrolls across any program listed for a channel included in the block guide 132. That is, the pop-up 140 may be triggered when the user scrolls across the FOX channel, for example, at any time of day including times outside the timeframe included in the block guide 132. In other implementations, the pop-up 140 may only be triggered when the user scrolls across a program within the time frame included in the block guide 132. In any of the above cases, upon being presented with the pop-up 140, the user may select the pop-up 140 and the system may display a block guide 132, for example, as shown in FIGS. 6 and 7.

In any of the above-mentioned access options, a block guide 132 may be presented revealing content for a particular day. Depending on the time of day the block guide 132 is accessed and the time frame of content available in the block guide 132, a previous day's content or a current day's content may be presented. In some implementations, the day's content that is presented may be based on a cut-off time. For example, where the content in the block of stored content relates to programming available from seven PM to ten PM, a cut-off time of four PM may be established. That is, where the block guide 132 is accessed before four PM, the previous day's content may be presented. However, if it is after four PM, but before the start time of the block window, the current day's content may be presented and may be highlighted as upcoming, for example. The content in the block guide 132 may be presented in a grayscale or other dimmed presentation to indicate that the programming is not yet available. Where the block guide 132 is accessed during the block window, the current day's programming may be presented and the programming that has begun may be presented as available and other programming may be grayed or otherwise signaled as not available. Other cut-off times may be used. For example, the cut-off time may be set to the start time of the block window and accessing the block guide 132 may show the previous day's content until the current day's content begins to be received. Still other cut-off times may be also be used. In some implementations, a user option may be provided for setting the cut-off time. In any of the above-mentioned cut-off time scenarios, the system 120 may check the cut-off time upon being instructed to access the block guide 132 and may compare the current time to the cut-off time to determine which day's block guide 132 to display.

In some implementations, the block guide 132 may be offered to users as an additional service and accessing the block guide 132 may be conditional upon having subscribed to the block guide service. In this implementation, where a user accesses the block guide 132, the system 120 may check for rights to access the block guide 132. Where a user has rights, the block guide 132 may be presented. Where the user does not have rights, an inactive version of the block guide 132 may be presented. For example, an inactive version may include a grayscale type menu such that the potential subscriber can view what the block guide 132 looks like and thus begin to understand how it might work and why they may be interested in subscribing. However, selections within the block guide 132 may not be active and the user may not be able to use the block guide 132 to select content to be displayed. Alternatively, where a user does not have rights, an informational screen may be provided. An informational screen may include a description of the block guide service program and may also include ordering information, for example. A menu of options may be presented on either an inactive block guide or an informational screen including a back button for returning to a previous guide screen and an ordering button, for example. A combination of an inactive block guide and an informational screen may also be provided.

Referring now to FIG. 6, one implementation of a block guide 132 is shown. The block guide 132 may include an interface for accessing the content in the block of content and, as such, may include a table, chart, listing, or other menu reflecting the content available in the block of content. In the context of television programming, for example, the block guide may include one or more channels 142 and the programming available on those channels for a selected airing time 144. The selected airing time 144 may correspond to the time frame or block window within which the block of stored content is received and stored in accordance with FIG. 1. As shown, for example, the block guide 132 may include channels associated with ABC, CBS, NBC, and FOX and may include programming on those channels extending from seven PM to ten PM.

A user may access the block guide 132 in one of the ways mentioned above and may peruse the block guide 132. The user may select a program to view from the block guide 132 and the content receiver 122 may transmit the associated content to the presentation device for viewing. The content receiver 122 may check the content requested and determine whether the selection relates to a live running program or whether the selection relates to stored content. Where the content requested relates to a live running program, the content receiver 122 may receive and transmit the live content. However, where the content requested relates to stored content, the content receiver 122 may access the stored content and transmit the stored content. In some implementations, for example, where a selected program is currently being aired live, but began earlier, the content receiver 122 may prompt the user with a question or selection list requiring input regarding whether they would like to view the program from the beginning or tune in to the live broadcast of the content. The selection list may include "beginning" and "live" options, for example.

Referring now to FIG. 7, a block guide 132 is shown, similar to that shown in FIG. 6. In this figure, however, the block guide bar 138 is shown highlighted and selected by the user. The block guide bar 138 in this view may provide the user with access to a different menu than the block guide bar 138 shown in FIG. 4, for example. That is, the block guide bar 138 in FIG. 4, may bring the user to the block guide 132. In FIG. 7, however, the user is already viewing the block guide 132. As such, selection of the block guide bar in FIG. 7, may provide the user with access to a block guide informational screen. In one implementation, the block guide informational screen may include options for configuring the user's block guides 132. In other implementations, the block guide informational screen may include a listing of available block guides 132. That is, for example, a listing of previous or other days block guides 132 may be shown and available for selection. Other information may also be provided on the block guide informational screen. It is also noted that the block guide bar 138 may be provided in a block guide 132 and may be active when the remaining portion of the block guide 132 is inactive. That is, for example where the block guide 132 is accessed by a non-subscriber, the block guide 132 may be inactive as described above, but the block guide bar 138 may be active. As such, when the block guide bar 138 is selected, an informational screen or an order screen may be presented for the user.

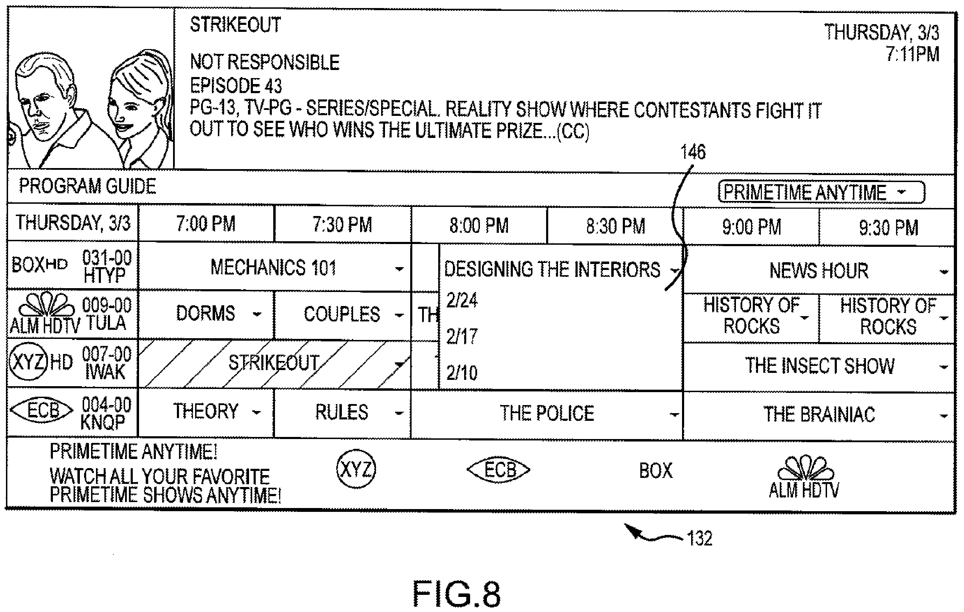

Referring now to FIG. 8, an additional block guide 132 is shown. In this implementation, some of the programs shown include an additional selection option relating to previous episodes. As such, for programs that are part of a series, an additional selection option may be provided. In some implementations, the additional selection option may expand in the form of a list 146 upon scrolling across a particular program. For example, as shown, when scrolling across the program available on FOX at eight PM, an additional list 146 may be presented including previous dates or previous episode names or other indications of previous episodes available via a block of content other than the one reflected in the currently presented guide 132.

In other implementations, the additional selection option 146 may include a link to a menu relating to the associated program. For example, the link may indicate that related episodes, other episodes, or previous episodes are available. Selection of the link by the user may cause the system to display a menu relating to the selected program. The menu may include a general description of the program and may include links to all available episodes, for example.

As described above, a single content receiver may be utilized to simultaneously receive and/or output one or more instances of content receive in a multiplexed signal. Thus, a tuner and smart card combination may be operable to receive multiple instances of content (e.g., multiple channels) simultaneously, which are available for viewing by a user. In accordance with some implementations, a tuner and smart card may be configured to receive and stored multiple channels at once, such as multiple channels broadcast during primetime viewing. While in use to record the multiple channels of content, the tuner may be unavailable to receive content on other frequencies. Thus, a user may not be able to change the tuner to receive some programs. Nonetheless, the user may be able to channel surf within the plurality of instances of content which are currently being received by the tuner. For example, a user may surf between the big four TV networks which are being simultaneously received by a tuner using a single control word.

In accordance with implementations described herein, a content receiver may be configured to identify one or more instances of content being received by a tuner from the same frequency band of at least one content provider and generate a block list of available programs including the one or more instances of content. For example, a receiver may identify that a tuner is being utilized to currently receive four channels, of which one channel of content may be currently output by the receiver for presentation to a user. The receiver may generate a block list for output which identifies the other three instances of content which are available to the user via the tuner at the present time. Thus, the user can select another channel presently being received by the tuner for output by the receiver. The block list may be output in any appropriate manner, such as overlaid onto a presently watched instance of content, or output as a separate menu, EPG or the like. In at least one embodiment, the receiver may include an option, selected via one or more menus, which allows the user to enter a limited channel surfing mode within the multiple instances of receiver content by receiver by a tuner. For example, the user may provide input to change a channel (e.g., via a channel up and down key), in which the receiver does not move numerically through all channels offered by a content provider, but rather moves through a subset of channels currently being received by a tuner.

Although FIGS. 3-8 and the above illustrate and describe generation and/or presentation of a block list that is configured as a block guide, other arrangements are possible. Though in some implementations a block guide may presented as illustrated and described, in other implementations the block list may list instance of content included in a block of content and may not be configured as a plurality of channels having a plurality of programs available for a schedule air time and/or may not be configured to include one or more of the various block guide features illustrated in FIGS. 3-8 and discussed above.

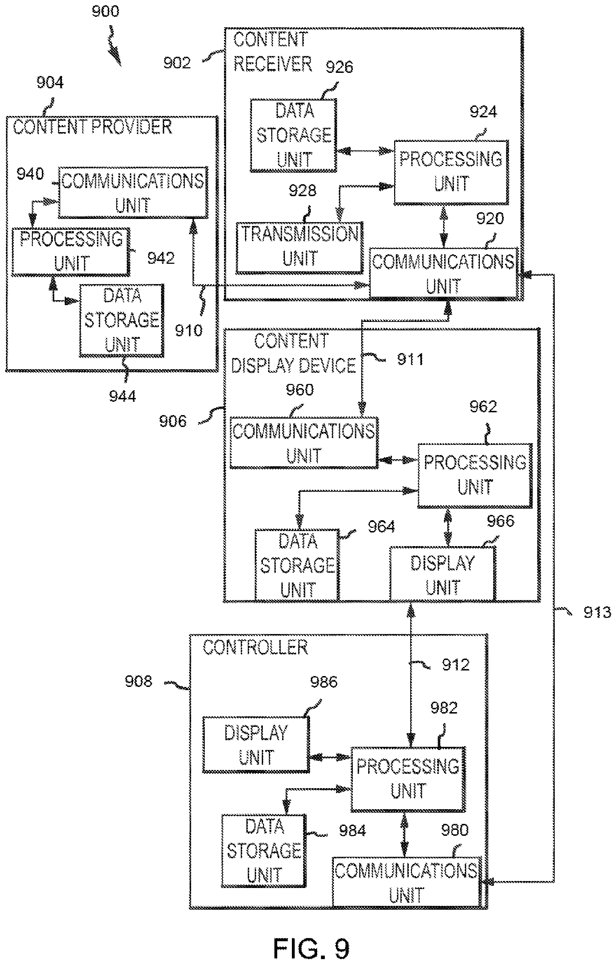

FIG. 9 is a block diagram illustrating a system 900 for providing on screen display content such as an EPG or otherwise that includes information on the stored content service feature. The system 900 may be at least partly incorporated into the system of FIG. 1. The system 900 includes a content receiver 902 (such as a set top box) for receiving and transmitting content (such as television programming and on screen display content), a content provider 904 for transmitting the content (such as a satellite or cable programming service provider), a content display device 906 for receiving and displaying the content (such as a television), and a controller 908 (such as a remote control) for transmitting data such as control signals to the content receiver 902.

The content receiver 902 is a device for receiving content from the content provider 904 and other external sources, for processing or decoding the content and for transmitting the content to the content display device 906. The content receiver 902 is, for example, a set top box, a television receiver, a digital video recorder, a computing device, a gaming device, or a television, which is generally located at a user's location (such as a user's residence or business). The content receiver 902 is operable to receive content from the content provider 904 (and/or another external source) by way of the transmission link 910. Such content is received by the communications unit 920 of the content receiver 902. The data from the content provider 904 may be provided to the processing unit 924 for executing instructions stored in the data storage unit 926 (such as the non-transitory storage medium 111) and for providing content to the content display device 906 and/or audio speakers via the transmission unit 928. The transmission unit 928 may be communicatively coupled to the content display device 906 by way of the processing unit 924, the communications unit 920 and the transmission link 911. In some implementations the processing unit 924 implements the stored content service feature by simultaneously recording and storing multiple instances of content in the memory unit 926. The multiple instances of content may be subsequently available to a user of the content receiver 902 without requiring multiple tuners to receive each of the multiple instances of content, without requiring the smart card 103 to decrypt multiple ECMs, and/or without requiring the combiner 109 to have to descramble multiple signals as described above in connection with the system of FIG. 1. The processing unit 924 may be configured to execute instructions stored in the data storage unit 926 for activating recording features, for recording content including recording multiple instances of content simultaneously for a number of programming channels over a timeframe, for managing recorded content and upcoming content to be recorded, and for generating on screen display content such as an EPG or otherwise that incorporates information identifying the stored content service feature.

The content provider 904 (such as a satellite programming company, a cable company, an Internet service provider, e.g., an online video service or Internet video provider, and the like) is generally remotely located from the content receiver 902. The content provider 904 utilizes a communications unit 940, a processing unit 942 and a data storage unit 944 to receive, manage and store content, which is transmitted as content by the communications unit 940 to the communications unit 920 of the content receiver 902 via the transmission link 910. The content provider 904 may transmit metadata to the content receiver 902 that may include data instructing the content receiver 902 to automatically record multiple instances of content simultaneously.

The content display device 906 is generally arranged proximate to and is communicatively coupled to the content receiver 902 and displays content transmitted by the content receiver 902. While the content display device 906 and the content receiver 902 are depicted as separate components in FIG. 9, the content receiver 902 may be incorporated with the content display device 906. The content display device 906 is, for example, a television, a computer screen, a video screen, or any other display device for displaying content. The content display device 906 includes a communications unit 960, which receives content from the communications unit 920 of the content receiver 902 by way of the transmission link 911. The content display device 906 also includes a processing unit 962 for executing instructions stored in a data storage unit 964, and a display unit 966 for displaying the content received from the content receiver 902 such as on screen display content.

The controller 908 is generally provided in an area proximate the content receiver 902 and is communicatively coupled to the content display device 906 by way of the transmission link 912, and to the content receiver 902 by way of the transmission link 913. The controller 908 is, for example, a remote control, such as a universal remote control, a dedicated remote control, or a computing device programmed to send command signals (such as selection signals) to the content receiver 902. The controller 908 includes a communications unit 980 for sending and receiving information, a processing unit 982 for executing instructions stored in a data storage unit 984, and an optional display unit 986 for presenting information stored within the data storage unit 984 such as information related to a command sent to the content receiver 902.

Returning to the content receiver 902, the processing unit 924 may be programmed to dynamically configure on screen display content, such as an EPG, to incorporate information informing the user about the availability or status of the stored content service feature. The data for informing the user of the stored content service feature may be stored in the memory unit 926 and may be accessible to the processing unit 924. The processing unit 924 may generate the EPG with the information on the stored content service feature incorporated therein as a selectable item such as a selectable block. For example, in some implementations, upon the user selecting the information on the stored content service feature from the on screen display (such as by utilizing the controller 908), the processing unit 924 may generate and the communications unit 920 may transmit a previously recorded instance of content stored within the content receiver, programming information for at least one instance of content previously recorded and stored within the content receiver, programming information for at least one instance of content to be recorded and stored within the content receiver, and/or programming information for at least one instance of content available to be recorded and stored within the content receiver. It will be appreciated that the previously recorded instance of content and the programming information described above may each be associated with the stored content service feature described above. This is in contrast to other instances of content recorded based on user selections of individual instances of content to be recorded, and is in contrast to programming information unrelated to the stored content service feature that may be generated by the content receiver in connection with an EPG or other forms of on screen display content.

In some implementations, upon selecting the selectable block, the processing unit 924 may transmit an enrollment screen to the content display device 906 prompting the user to enroll the user's account in the stored content service feature. In response to the user entering enrollment selections, the processing unit 924 may activate the stored content service feature and the processing unit 924 may record multiple instances of content.

In some implementations, the processing unit 924 of the content receiver 902 may dynamically configure an EPG to include information directing the user to previously recorded instances of content and/or may notify the user that upcoming instances of content that are to be recorded for specified channels during a timeframe. The data for informing the user of the stored content service feature may be stored in the memory unit 926 accessible to the processing unit 924. The processing unit 924 may generate the EPG with the stored content service feature incorporated therein as a selectable block. In some implementations, upon selecting the selectable block (such as by utilizing the controller 908), the processing unit 924 may generate and instruct the processing unit 920 to transmit a listing of recorded instances of content available for the user to view and/or a listing of instances of content that are to be recorded for the user to view sometime in the future.

In some implementations, the processing unit 924 may be programmed to dynamically configure on screen display content as an overlay that incorporates information on the stored content service feature. The information identifying the stored content service feature may be transmitted to the content display device 906 as an overlay to video content, for example. The user may thus view the stored content service feature while simultaneously viewing live or previously recorded video content. In some implementations, the stored content service feature may be displayed as an overlay to video content for a predefined period of time, such as 3 seconds, and may disappear from the content display unit unless an action is taken in connection with the information displayed.

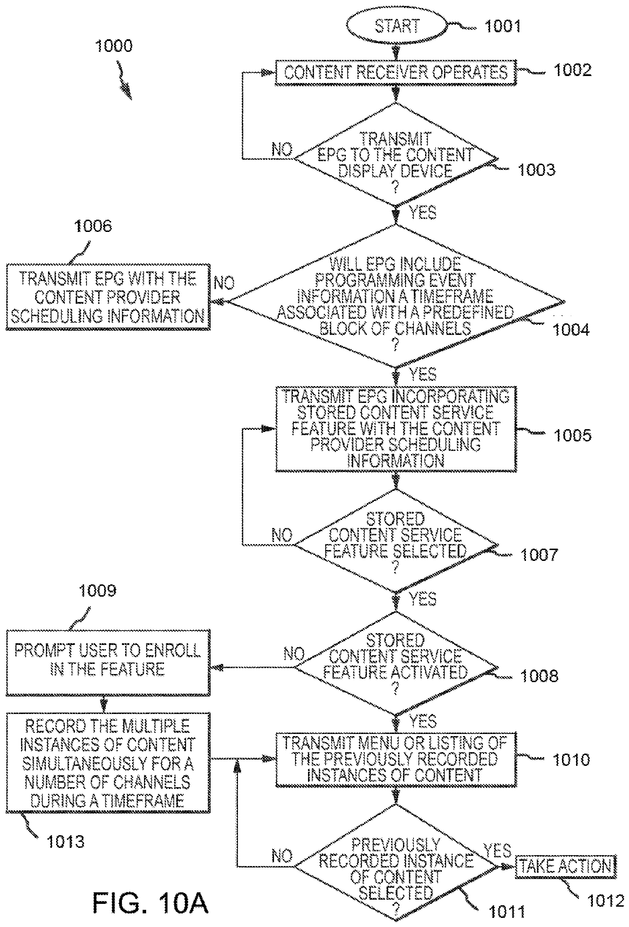

FIG. 10A illustrates a method 1000 for generating an EPG incorporating the stored content service feature with content provider scheduling information utilizing a content receiver. The method 1000 may be performed by the systems 100 and 900 of Figures 1 and 9. The flow begins at block 1001 and proceeds to block 1002 where the content receiver operates. The flow then proceeds to block 1003 where the processing unit 924 determines whether an EPG is to be transmitted to the content display device 906. If not, the flow returns to block 1002. If so, the flow then proceeds to block 1004 where the processing unit 924 optionally determines whether the EPG will include programming event information for a timeframe associated with a predefined block of channels. If so, the flow proceeds to block 1005 where the processing unit 924 transmits an EPG to the content display device 906 that incorporates information on the stored content service feature. If not, the flow proceeds to block 1006 where the processing unit 924 transmits an EPG to the content display device 906 without the information on the stored content service feature.

In some implementations, the flow optionally proceeds directly from block 1003 to block 1005. That is, in response to the processing unit 924 determining the EPG is to be transmitted to the content display device from block 1003, the flow may then proceed to block 1005 where the processing unit 924 transmits an EPG to the content display device 906 that incorporates stored content service feature within the EPG regardless of the timeframe or channels associated with the EPG described in connection with block 1004.

In some implementations, the flow continues to block 1007 where the processing unit 924 determines whether a selection of the stored content service feature displayed within the EPG has been made. If not, the flow returns back to block 906 in which the information on the stored content service feature is displayed within the EPG. If so, the flow optionally proceeds to block 1008 where the processing unit 924 determines whether the stored content service feature has been activated within the content receiver 902. This operation may involve the processing unit 924 checking whether multiple instances of content have previously been recorded simultaneously for a predefined number of channels. If the stored content service feature has not been activated, the flow proceeds to block 1009 where the processing unit 924 prompts the user to enroll in the stored content service feature (such as by instructing the user to call their content provider or by utilizing the controller 908 to enter selections confirming the content receiver 902 is to record the multiple instances of content simultaneously for a number of channels). If activated, the flow proceeds to block 1010 where the processing unit 924 transmits a menu or listing of the previously recorded instances of content to the content display device 906. The flow may then proceed to block 1011 where the processing unit 924 determines whether a selection from the listing of previously recorded instance of content has been entered. If not, the flow proceeds back to block 1010 where the menu of previously recorded instances of content is displayed. If a selection has been entered, the flow proceeds to block 1012 where the processing unit 924 takes action (such as playing the instance of content selected, displaying programming details for the instance of content selected, displaying a listing of a the number of instances of content (e.g., episodes) for the selected instance of content, and so on.

Returning to block 1009, upon enrolling in the stored content service feature, the flow may proceed to block 1013 where the processing unit 924 records the multiple instances of content simultaneously for a number of channels during a timeframe. The flow may then proceed back to block 1010 where the user may select from a menu or listing of the previously recorded instances of content described above.

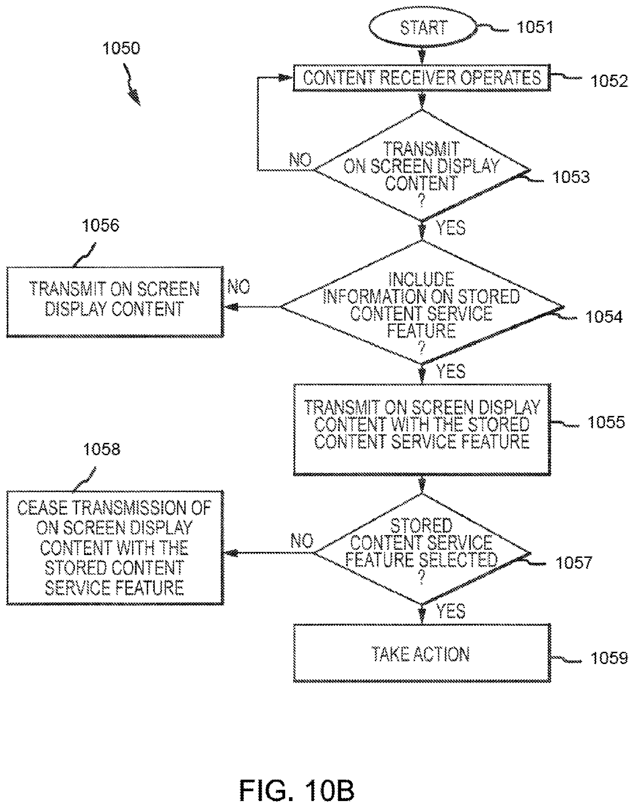

FIG. 10B illustrates a method 1050 for generating on screen display content including information on the stored content service feature utilizing a content receiver. The method 1050 may be performed by the systems 100 and 900 of Figures 1 and 9. The flow begins at block 1051 and proceeds to block 1052 where the content receiver operates. The flow then proceeds to block 1053 where the processing unit 924 determines whether the on screen display content is to be transmitted to the content display device 906. The on screen display content may be an overlay to video content, for example. If not, the flow returns to block 1052. If the on screen display content is transmitted, the flow then proceeds to block 1054 where the processing unit 924 optionally determines whether the on screen display content will include the information on the stored content service feature. If so, the flow proceeds to block 1055 where the processing unit 924 transmits on screen display content to the content display device 906 that includes the information on the stored content service feature. If not, the flow proceeds to block 1056 where the processing unit 924 transmits on screen display content. However, in some implementations, the processing unit 924 transmits an the on screen display content with the information on the stored content service feature in each instance, thereby omitting blocks 1054 and 1055 from the method 1050.

From block 1056, the flow then proceeds to block 1057 where the processing unit 924 determines whether the stored content service feature has been selected (such as by utilizing controller 908). If not, the flow proceeds to block 1058 where the processing unit 924 ceases to transmit the on screen display content with the stored content service feature. If so, the flow proceeds to block 1059 where the processing unit 924 takes some action. For example, the processing unit 924 may take action by checking whether the user has enrolled in the stored content service feature and may prompt the user to enroll if necessary; by displaying a menu of previously recorded instances of content to the content display device 906; by displaying programming details for the instance of content selected; by displaying a listing of a the number of instances of content (e.g., episodes) for the selected instance of content; by playing the previously recorded instance of content selected; and so on.

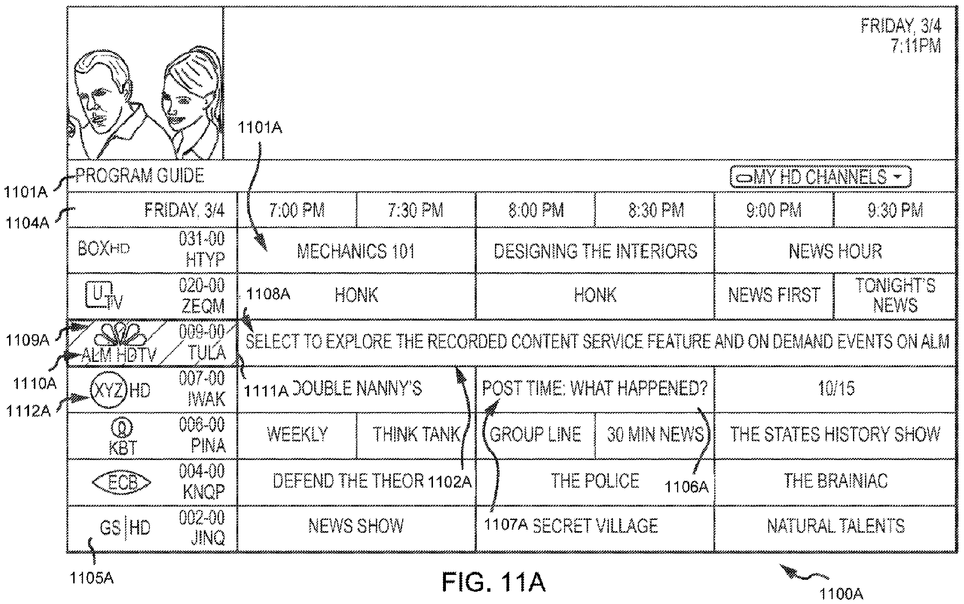

Figures 11A-11D are diagrams illustrating implementations for displaying the information on the stored content service feature as a portion of an on screen display, such as an EPG. In FIG. 11A, an EPG 1101A incorporates information for the stored content service feature 1102A with the content provider scheduling information. The EPG 1101A may be generated utilizing the content receiver 902 in the system of FIG. 9. In FIG. 11A, the EPG 1101A is composed of a grid 1103A with a date/time axis 1104A and a channel axis 1105A. The grid 1103A is composed of a number of blocks 1106A identifying content provider scheduling information 1107A such as alpha-numeric text identifying instances of content (television shows). According to the implementations provided herein, the grid 1103A incorporates information for the stored content service feature 1102A by including a prompt or message 1108A proximate or adjacent to the channel block 1109A (e.g., to the right of the channel block 1109A) and the associated channel 1110A underlying the cursor 1111A. The prompt or message 1108A provides the user with information on viewing details related to the information on the stored content service feature 1102A. This is in contrast to the content provider scheduling information 1107A displayed in the blocks 1106A for channels 1112A not affected by the cursor 1111A. It will be appreciated that upon moving the cursor 1111A vertically to another channel, another prompt or message 1108A may be displayed for the channels the content receiver 902 is capable of implementing the stored content service feature. Upon moving the cursor 1111A to the right, e.g., to an area underlying a time range (such as 8:00 PM to 9:00 PM), the prompt or message 1108A may be replaced with blocks 1106A identifying content provider scheduling information 1107A as shown for the channel 1112A.

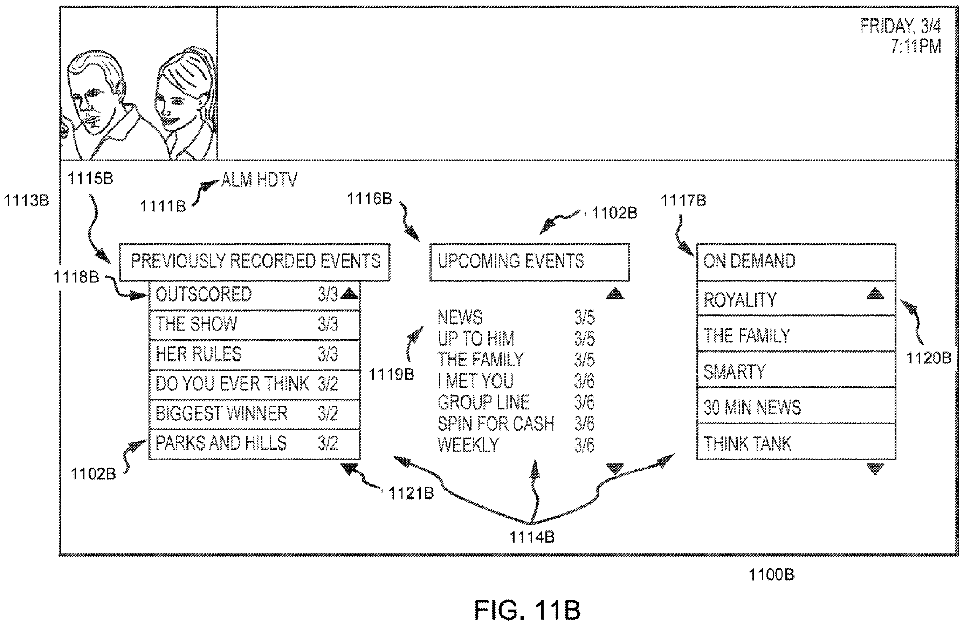

Turning to FIG. 11B, in response to the user navigating to and selecting the channel block 1109A utilizing the cursor 1111A, the content receiver 902 may transmit an on screen display 1113B identifying a number of menus 1114B associated with the stored content service feature including a menu of previously recorded instances of content 1115B, a menu of upcoming instance of content to be recorded 1116B and/or a menu of on demand instances of content 1117B associated with the channel 1111B identified and selected from the EPG 1101A. The menu of previously recorded instances of content 1115B may be provided as a number of selectable items 1118B that enables the user to view the recorded instance of content and/or additional details for the instance of content selected. The menu of upcoming instance of content to be recorded 1116B may be provided as a listing of items 1119B, which may be selectable for viewing additional details for the instance of content. The menu of on demand instances of content 1117B may be provided as a number of selectable items 1120B for viewing the instance of content, for purchasing the service, and/or for viewing additional details for the instance of content selected. The user may scroll through the various menus 1114B utilizing the arrow icons 1121B and/or the controller 908. The on screen display 1113B of FIG. 11B may include additional menus such as menus identifying previously recorded instances of content having been recorded using traditional recording methods, such as recordings previously selected for recording by the user.

In addition or as an alternative to Figures 11A and 11B, in some implementations, the information on the stored content service feature 1102A may be provided as a separate item within the grid 1103A rather than being associated with the channel block 1109A and channel 1110A. In this case, the information on the stored content service feature 1102A may be associated with one or more channels (e.g., 1110A and 1112A) for which the content receiver 902 is configured for implementing the stored content service feature. Accordingly, the on screen display 1113B may include menus 1114B associated with the stored content service feature for such channels. Furthermore, referring back to FIG. 11A, the information on the stored content service feature 1102A may be provided in the manner of FIG. 11A, but the on screen display 1113B may include menus 1114B associated with the stored content service feature 1102B for a number of channels.

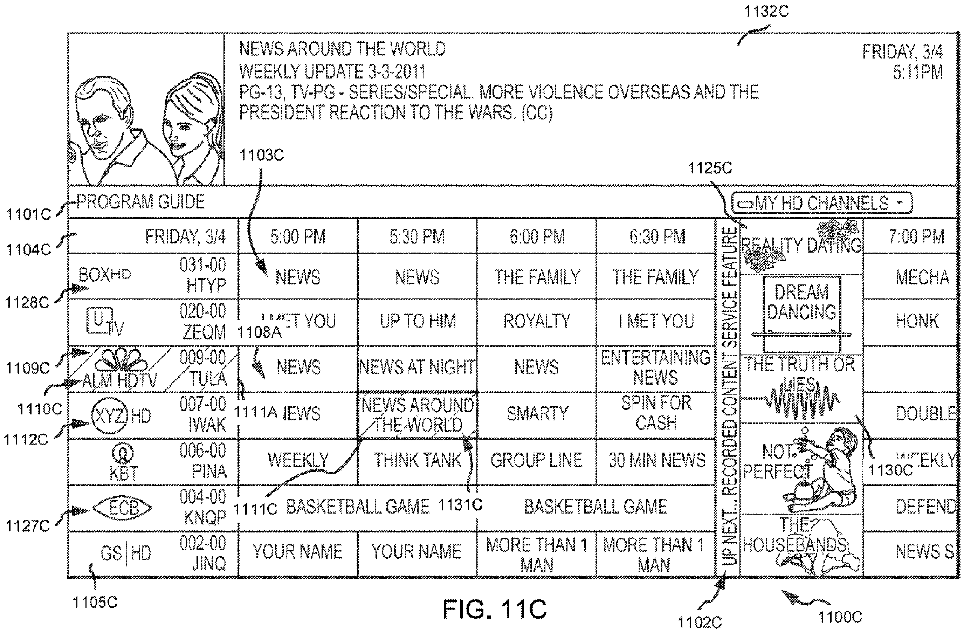

FIG. 11C illustrates an EPG 1101C incorporating information for the stored content service feature 1102C with the content provider scheduling information. The EPG 1101C may be generated utilizing the content receiver 902 in the system of FIG. 9. In some implementations, the vertically arranged selectable item 1125C may be arranged anywhere within the EPG 1101C and may provide the user with a visual indication about the availability or operational state of the stored content service feature. In FIG. 11C, the information on the stored content service feature 1102C is provided as a vertically arranged selectable item 1125C within the grid 1103C in a portion of the EPG 1101C corresponding to the time preceding the activation of the stored content service feature 1102C. For example, the stored content service feature may be associated with the content receiver 902 simultaneously recording the multiple instances of content for channels 1110C, 1112C, 1127C and 1128C over a three-hour timeframe from seven PM and ten PM. The vertically arranged selectable item 1125C representing the information on the stored content service feature 1102C may accordingly precede the three-hour timeframe in the portion of the EPG 1101C associated with the channels available to be or that are scheduled to be simultaneously recorded. In some implementations, the vertically arranged selectable item 1125C may include pictures 1130C identifying one or more instances of content available for recording or scheduled to be recorded. In some implementations, the cursor 1111C arrangement may result in the content receiver 902 dynamically modifying the vertically arranged selectable item 1125C to include pictures 1130C associated with the channel 1112C for the instance of content 1131C underlying the cursor 1111C. The EPG 1101C also includes a message box 1132C showing details of the instance of content 1131C associated with the channel 1112C.

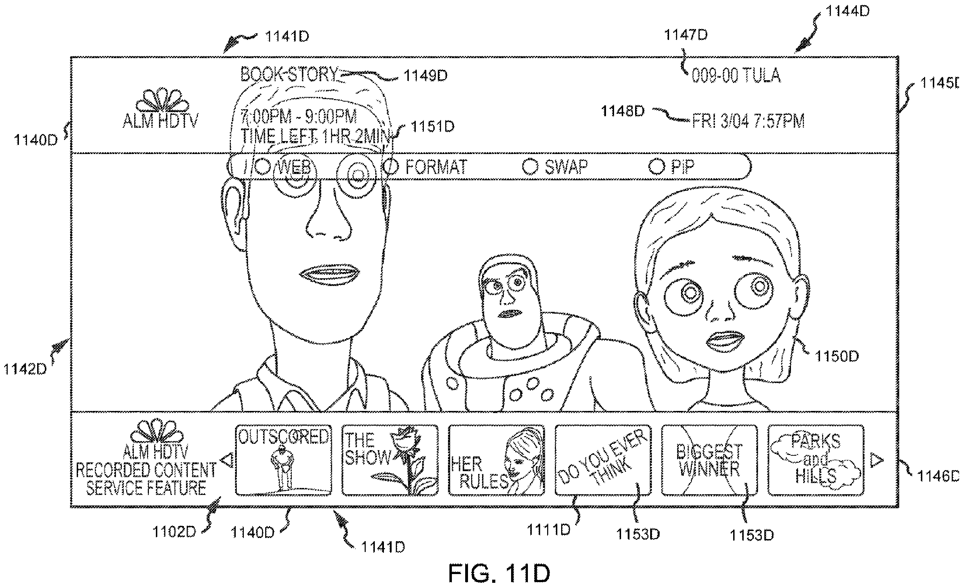

FIG. 11D is a diagram illustrating on screen display content 1140D including information on the stored content service feature 1102D. The on screen display content 1140D may be provided as an overlay 1141D to video content 1142D and may be generated utilizing the content receiver 902 in the system of FIG. 9. The user may navigate to the information on the stored content service feature 1102D utilizing the cursor 1111D. In FIG. 11D, the on screen display content 1140D includes programming information 1144D in an upper region 1145D and the information on the stored content service feature 1102D in a lower region 1146D. The upper region 1145D includes programming information 1144D such as a channel and/or network identifier 1147D, a date and/or time field 1148D, an identification field 1149D identifying the instance of content 1150D displayed as the video content 1142D, a run and/or remaining time field 1151D identifying the run and/or remaining time for the instance of content 1150D, and so on. The instance of content 1150D displayed as the video content 1142D may be live or previously recorded content. In the lower region 1146D of the on screen display content 1140D, information identifying information on the stored content service feature 1102D may be displayed as a series of pictures 1153D identifying instances of content that have been or are available to be recorded. While the information on the stored content service feature 1102D is provided in a separate, lower overlaying region 1146D compared to the upper overlaying region 1145D in FIG. 11D, the information on the stored content service feature 1102D may be displayed in any region within the on screen display content 1140D, alone or in combination with the programming information 1144D, and the region may be an overlay 1141D to any portion of the video content 1142D (such as at a left side, right side, middle, center, upper and/or lower portion).

In FIG. 11D, the cursor 1111D overlies a picture 1143D, and upon selection of the picture 1143D (such as by utilizing the controller 908), the content receiver 902 may take some action such as transmit the instance of content for viewing, transmit an enrollment screen as described above, transmit the on screen display 1113B with the menus 1114B described above, transmit details about the instance of content, and so on. When the cursor 1111D is not utilized in connection with the information on the stored content service feature 1102D, the on screen display content 1140D may only be temporarily transmitted by the content receiver 902, thereby resulting in the video content 1142D being displayed without the overlaying on screen display content 1140D after some timeframe (such as 3-5 seconds). It will be appreciated that the on screen display content 1140D may be displayed as an overlay to the video content 1142D during operations such as changing the programming channel and/or utilizing the controller 908 communicate with the content receiver 902 (e.g., for entering selections), for viewing details related to the instance of content 1150D, upon exiting from the EPG 1101, and so on. In addition, the information on the stored content service feature 1102D may be dynamically modified in response to such operations. For example, in response to changing the programming channel, the pictures 1153D identifying instances of content may be updated to identify instances of content delivered by the programming channel being transmitted to the content display device 906. In another example, the programming channel transmitted to the content display device 906 may be affiliated (such as a network affiliate) with a programming channel for which the stored content service feature is active. In this case, the information on the stored content service feature 1102D may be dynamically modified based on a programming channel affiliation with another programming channel, and the pictures 1153D identifying instances of content may be updated to identify instances of content delivered by the affiliated programming channel.

In some implementations, the information on the stored content service feature 1102A, 1102C, 1102D provided within an EPG 1101A, 1101C or as on screen display content 1140D may be displayed during predefined times and/or channels. For example, the information on the stored content service feature 1102A, 1102C, 1102D may be displayed during a timeframe preceding the simultaneous recording of the multiple channels (such as a preceding 1-5 hours), during the timeframe of the simultaneous recording of the multiple channels, for predefined channels (such as for programming channels the content receiver 902 is capable of implementing the stored content service feature and affiliate programming channels), and combinations thereof. In other implementations, the information on the stored content service feature 1102A, 1102C, 1102D may be displayed at any time and as an overlay to video content for any channel.

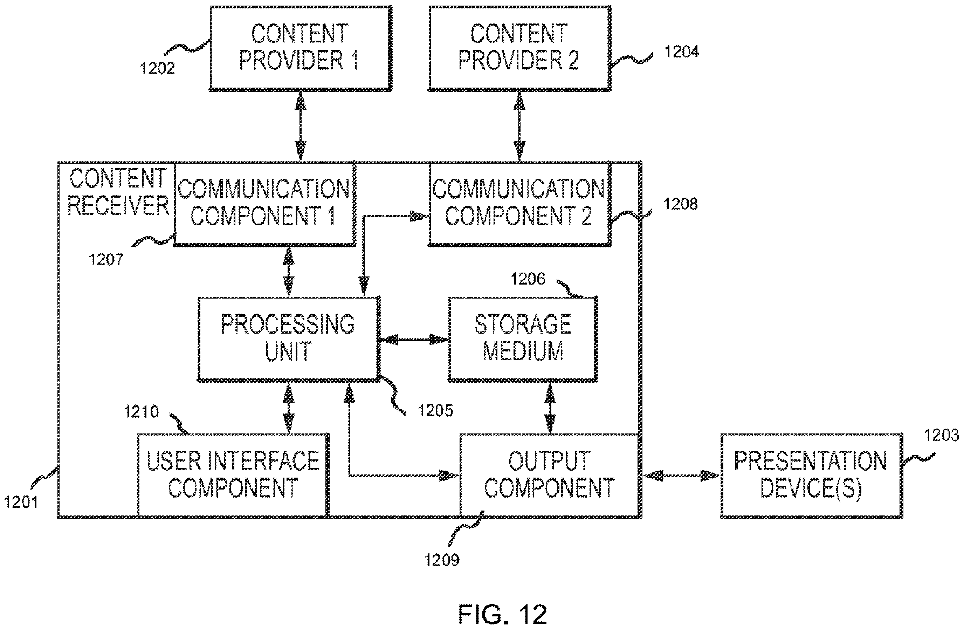

FIG. 12 is a block diagram illustrating a system 1200 for grouping, recording, and/or presenting content. The system 1200 includes a content receiver 1201 which may be a set top box, a television receiver, a digital video recorder, a digital music player, a desktop computer, a laptop computer, a tablet computer, a mobile computer, a cellular telephone, a smart phone, and/or any other electronic device that is able to receive and/or provide received content. The system 1200 may also include one or more content providers 1202 (such as one or more satellite television programming providers, cable television programming providers, Internet service providers, video on demand providers, pay-per-view movie providers, and/or other entities that are configured to transmit instances of content to the content receiver) and/or one or more presentation devices 1203 (such as one or more cathode ray tube displays, computer monitors, liquid crystal displays, televisions, speakers, and/or other devices configured to present instances of content transmitted by the content receiver).

The content receiver 1201 may include one or more processing units 1204 (which may perform functions and/or include components (not shown) that perform functions corresponding to the smart card 108, the descrambler 109, and/or the demultiplexer 109 of FIG. 1), one or more non-transitory storage media 1205, one or more communication components 1206 (which may include, but is not limited to, the tuner 107 of FIG. 1), one or more output components 1207, and one or more user interface components 1208.

The processing unit 1204 may execute instructions stored in the non-transitory storage medium 1205 to receive one or more instances of content, instructions to record such instances of content, and/or EPG data from the content provider 1202 via one or more communication links (such as one or more satellite communication connections, coaxial cable communication connections, Internet communication connections, radio-frequency connections, and/or other communication links) utilizing the communication component and/or store such content in the non-transitory storage medium (which may be at the direction of one or more instructions received from the content provider that specify to record received instances of content).

The processing unit 1204 may also execute instructions stored in the non-transitory storage medium 1205 to transmit instances of content received from the content provider 1202 and/or stored in the non-transitory storage medium to the presentation device 1203 utilizing the output component. In one or more cases, the processing unit may execute the instructions described above in response to one or more user instructions received from one or more user input/output devices (not shown) (such as one or more remote control devices, touch screens, buttons, keyboards, mice, and/or other input/output devices) via the user interface component 1208.

Additionally, the processing unit 1204 may execute instructions stored in the non-transitory storage medium 1205 to transmit one or more EPGs to the presentation device 1203 via the output component 1207 (which may be performed in response to one or more user instructions received via the user interface component 1208). The EPG may include schedule information for one or more instances of content accessible by the content receiver 1201 from the content provider 1202. The schedule information for the instances of content may be configured in the EPG as slots in a grid arranged by time associated with the respective instance of content and source (such as channel) associated with the respective instance of content. In some cases, the EPG may include one or more additional information fields that may present additional information regarding an instance of content (such as a program description and other program information for a television program) when user selection of a slot corresponding to the instance of content is received via the user interface component 1208.

The processing unit 1204 may determine whether or not one or more instances of recorded content are stored in the non-transitory storage medium 1205. If so, the processing may incorporate content information for one or more of the instances of recorded content in the EPG. The content information that the processing unit incorporates in the EPG may include, but is not limited to, one or more portions of the instance of recorded content such as one or more images and/or one or more video segments and/or one or more images and/or video segments related to the instance of recorded content. The processing unit may obtain the portion of the instance of content and/or the image or video segment related to the instance of recorded content (such where the instance of content is an episode of a television series and the processing unit obtains an image from a future episode) to include in the content information by processing the instance of content stored in the non-transitory storage medium and/or by receiving images and/or video segments from the content provider.

In some implementations, the processing unit 1204 may be configured to always include content information for one or more instances of recorded content when such instances of recorded content are stored in the non-transitory storage medium 1205. For example, the processing unit may include a field in the EPG that includes content information for each of the instances of recorded content stored in the non-transitory storage medium. In other implementations, the processing unit may provide an EPG that does not include such content information and may incorporate the content information after receiving a user selection of one of more slots of the EPG via the user interface component 1208. The content information incorporated in response to the user selection of the slot may correspond to one or more recorded instances of content stored in the non-transitory storage medium that are associated with the instance of content that corresponds to the slot.

Regardless of whether the processing unit 1204 incorporates the content information prior to user input or in response to user input, the processing unit may be configured to perform one or more actions in response to receiving a user selection of the content information incorporated into the EPG. For example, in some implementations the processing unit may incorporate additional information related to the instance of recorded content corresponding to the selected content information into the EPG. Such additional information may include, but is not limited to, descriptions of the instance of content, ratings of the instance of content, information about the number of related instances of content are stored on the non-transitory storage medium 1205 (such as where the instance of content is an episode of a particular television series and the additional information includes the number of episodes of that particular television series that are stored in the non-transitory storage medium), and/or other such information related to the particular instance of content. By way of another example, in some implementations the processing unit may be configured to access an instance of content that corresponds to the selected content information from the non-transitory storage medium.

In various implementations, the instances of recorded content for which the processing unit 1204 incorporates content information in the EPG may be the multiple instances of content 101 selected to be automatically recorded as illustrated in FIG. 1 and described above. The content receiver 1201 may have automatically recorded the multiple instances of content 101 in response to receiving instructions to record the multiple instances of content 101 from the content provider 1202. When providing the EPG, the processing unit may include content information for each of the multiple instances of content 101. In various other implementations, the instances of recorded content for which the processing unit 1204 incorporates content information in the EPG may be instances of content which the processing unit has recorded in response to user input received via the user interface component 1208 such as recorded broadcast content, recorded video on demand content, recorded pay-per-view content, and so on.

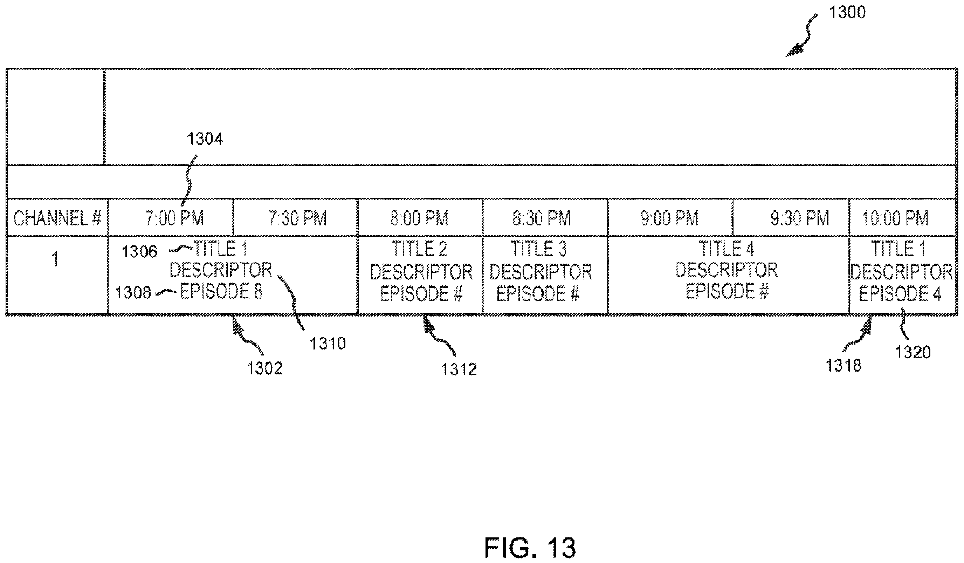

Fig. 13 is a diagram of an example EPG programming that may be generated by the processing unit 1204 of the content receiver 1201. The EPG 1300 may be display data 1302 related to content, which in this example is audio visual programming content. The data 1302 may vary depending on the content. For example, the EPG 1300 may include information relating to content that may be presented at a variety of different time slots, e.g., from 7 pm to 10pm. The data 1302 for each time slot may vary, as the content varies. The data 1302 may include a title 1306, an episode identifier 1308, a description 1310, and so on. It should be noted that the data 1302 may be displayed on the EPG 1300 and/or may be included or attached to the content (e.g., as metadata associated with the content). As such, the depiction of the EPG 1300 is merely exemplary and is not meant to be limiting (and in some instances may not be needed).

The data 1302 may vary for each selected content. For example, different content instances may include the same title 1306, but the episode identifier 1308 may be varied. Continuing the example, data 1302 for the first content listed in the EPG 1300 may have the same title 1306 as the content 1318 listed for the 10pm time slot, but the episode numbers 1308, 1320 may be different. Both instances of the content may be instances of a television show or series, and thus may have the same title, but may be different episodes of the same show, e.g., episode 1 and episode 4. The episode identifier 1308, 1320 may be used to indicate the order of the particular content with respect to an entire season and/or series of the content.

The episode identifier 1308, 1320 allows instances where the content may be re-run, syndicated, or otherwise presented at different times and dates to be related to the original presentation order. The episode identifier 1308, 1320 may allow a user watching instances of a particular content series to determine if he or she is viewing the instance in the original presentation order or in another order. Similarly, the description 1310 may provide a user with substantially any desired information with respect to the content, e.g., actors that may be in the content, a description of the content episode, and so on.

It should be noted that the data 1302 for each content may further include the time slot 1304 and/or date in which the content is (or was) presented. This may allow the content receiver 1201 (or other unit) to determine when the content was originally presented, which may allow the content receiver 1201 to replay the content in the original presentation order (e.g., chronological and/or series). This is discussed in more detail below with respect to Fig. 5. Furthermore, it should be noted that the data 1302 may include multiple other types of information and/or may vary based on the type of content. Therefore, the different data 1302 categories listed are meant to be exemplary and not limiting.

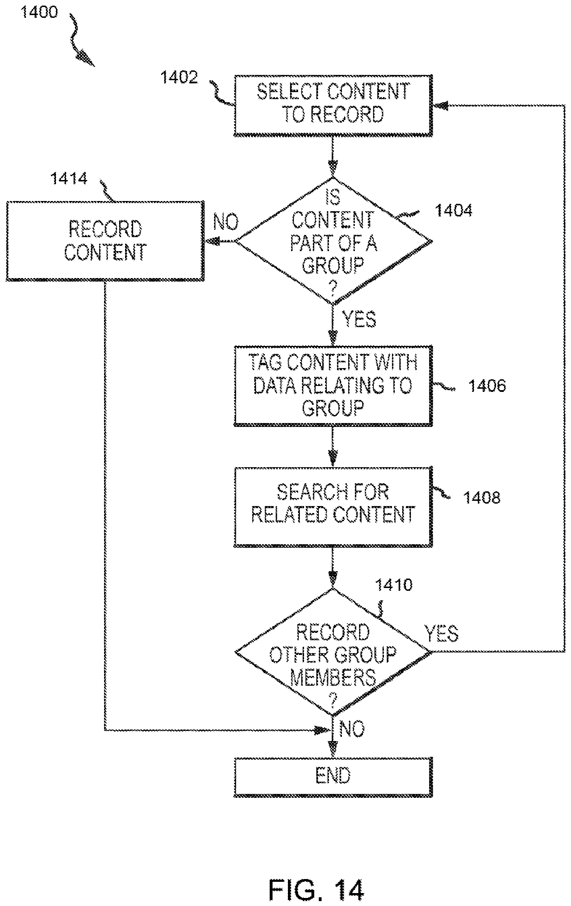

Fig. 14 is a flow diagram illustrating a method 1400 for grouping content. The method 1400 may begin with operation 1402 in which content is selected to be recorded. Operation 1402 may be completed by a user providing input to the content receiver 1201 indicating that he or she wishes to record or store an additional content, or the content may be selected by the content receiver 1201. For example, as shown in Figs. 1 and 12, the content receiver 1201 may record content corresponding to a selected time slot or series of time slots, e.g., "primetime." Once particular content is selected to be recorded, the method 1400 may proceed to operation 1414. In operation 1414 the content receiver 1201 records the content. In some instances, the content may be automatically recorded, without requiring an input by the user.

Once the content is recorded, the method 1400 proceeds to operation 1404. Operation 1404 determines whether the selected content is part of a group. The group may be defined by substantially any type of criteria, e.g., title 1306, episode identifier 1308, time slot 1304, description 1310, channel and so on. Furthermore, the group may correspond to a user input, e.g., content related to historical shows, sports, home and garden, and so on. If the content is not part of a group, but rather a discrete content selection, the method 1400 may proceed to operation 1404 and the selected content may be recorded, e.g., by the content receiver 1201. If, however, the content is part of a group, the method 1400 may proceed to operation 1406.

Operation 1406 may tag the content with data relating to the group. It should be noted that in some instances the content may be already tagged with the selected data, e.g., data 1302 may provide sufficient information (title 1306, episode identifier 1308, description 1310, time slot 1304) to group the content or relate the content to other content. However, in other instances, the grouping may be selected by the user or the content receiver 1201 (e.g., all content for a group of time slots 1304). Therefore, the content receiver 1201 may tag (or additionally tag) the content with the data relating to its particular group.

The content receiver 1201 may tag the content with data relating to the group by inserting metadata into the electronic file storing the content, by changing another characteristic of an electronic file of the content, or the like. Additionally or alternatively, the content may be tagged with data relating the group and may also be indexed by the content receiver 1201. Once the content is tagged, the method 1400 may proceed to operation 1408.

Operation 1410 may search for related content, e.g., by scanning the data 1302 provided for each content, and may then return to operation 1402. The relatedness of content may be determined by similar data 1302, such as the same title 1306, broadcast channel, descriptor 1310, or the like. Operation 1410 may be performed by scanning or searching already recorded content on the content receiver 1201, currently broadcasted content, and/or content presented on the EPG that may be broadcast in the future.

Operation 1408 determines whether the other group members should be recorded. In one example, the content receiver 1201 may be configured to present an option to the user on whether he or she wishes to record the related content. In another example, the content receiver 1201 may make a determination (based on the type of group, whether the other content has been previously recorded, and so on), whether the other content should be recorded. If, in operation 1408 the other group members are to be recorded, the method 1400 may proceed to operation 1410. If the content is to be recorded, the method 1400 may return to operation 1402, so that the method 1400 may repeat until all related, available and/or desired content may be recorded.

As briefly described above, the method 1400 illustrated in Fig. 14 is merely one option of tagging content and/or grouping content together. In some instances, the content may be grouped together based on the data 1302 provided and/or displayed in the EPG 1300. Similarly, the method 1400 of Fig. 14 may be used to enhance or add to the data 1302 provided in the EPG 1300, e.g., based on user's preferences, and the like.

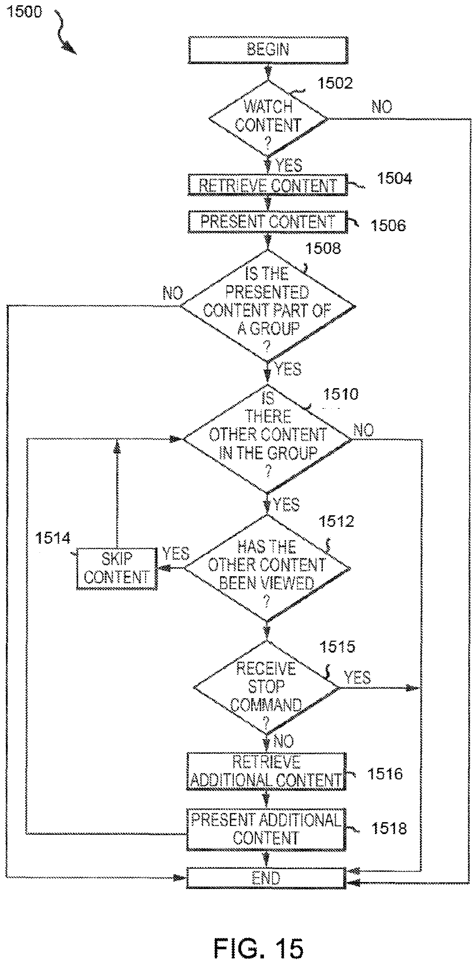

Fig. 15 is a flow chart illustrating a method for displaying, recording and/or presenting content. The method 1500 may be configured to selectively present content depending on whether the content is part of a group, or otherwise related to other content. The method 1500 may begin with operation 1502 which determines whether a group of content should be presented. For example, the content receiver 1201 may present an option to a user to watch a select content/group of content, a user may select a content to watch, or the like. If the group of content is not selected to be viewed, the method 1500 may proceed to operation 1509 and the single instance of content may be presented. For example, the user may select a particular content and then the method 1500 may present whether the user may wish to view the entire group of content. However, in some instances the user may wish to only view a particular content instance and therefore in operation 1509, only the single content instance may be played.

If in operation 1502 the group of content is selected to be watched, the method 1500 may proceed to operation 1504 and the content may be retrieved. For example, the content may be stored by the content receiver 1201 as part of a block storage of particular time slots 1304 and/or may be stored separately as a discrete recording or other type of storage within the content receiver 1201 (e.g., a series specifically selected by the user to be recorded).

Once the content is retrieved, the method 1500 may proceed to operation 1506, and the content may be presented. The content receiver 1201 may communicate the content to a display device, such as a television, or the content receiver 1201 itself may present the content, and so on. After or as the content is being presented, the method 1500 may proceed to operation 1507 and the content may be tagged as being viewed. For example, the content receiver 1201 may place a metadata tag on the content indicating that the content has been viewed at least once.

After the content has been presented and tagged as being viewed, the method 1500 may proceed to operation 1508. Operation 1508 determines whether the content is part of a group. As described above with respect to Fig. 14, the content may be selectively tagged with data that may indicate membership in a group or another relationship between selected content. The group may be determined by the time slot 1304 that the content was originally presented. For example, content displayed in the time slots 1304 corresponding to 7pm to 10pm may be grouped together as the primetime slots for a particular day. In another example, the content may be selectively grouped together based on the title of the content, e.g., each episode of a particular television show may be grouped together as belonging to a group corresponding to the television show. In still another example, the content may be grouped together based on the episode identifier 1308. If the content is not part of a group, the method 1500 may end, but if the content is part of a group the method 1500 may proceed to operation 1510.

Operation 1510 determines whether there is other content within the group. Operation 1510 may determine whether there is other content recorded on the content receiver 1201. For example, the content receiver 1201 may utilize a lookup table or other index to determine content relationships, and if a particular content instance is a member of a group. In another example, the content may include a forward pointer and/or a backward pointer to indicate a relationship with other content, e.g., a forward pointer indicating the prior content and a backward pointer indicating a following content. In some instances, every content recording may be stored in a different file for a particular section of time slots. For example, every content instance from 7pm to 10pm for a particular day may be stored in a single electronic file on the content receiver 1201. In these instances, the file may include metadata or other indicators separating each separate content instance. In other instances, the content may be stored in separate electronic files. In either instance, the content receiver 1201 may determine (e.g., by searching, indexing, or the like), if there is other content in the group.

If there is other content in the group, in one embodiment, the method may proceed to optional operation 1512. Optional operation 1512 determines whether the other content has been viewed. For example, a user may have already viewed a selected time slot 1304 and/or episode of a selected content. In this example, the method 1500 may proceed to operation 1512 and the previously viewed content or portions thereof may be skipped or otherwise passed over. Therefore, operation 1514 may help to prevent a user from viewing content that he or she has already seen, although the content may belong to a particular group.

In some embodiments, operation 1514 may be presented as an option to the user. For example, there may be some instances where a user may wish to re-watch a particular content, and/or another user may have viewed the content and the particular user may want to view it, and so on. After operation 1514, the method 1500 may return to operation 1510, which may determine whether there is other content in the group.

If in operation 1512, the method 1500 determines that the other content in the group has not been viewed, the method may proceed to operation 1515. Operation 1515 may determine whether a stop command has been received, e.g., whether an input has been provided to the content receiver 1201 indicating that a user may no longer wish to view content. If a stop command has been received, the method 1500 may terminate. However, if in operation 1515 a stop command has not been received, the method 1500 may proceed to operation 1516.

Operation 1516 retrieves the additional content related to the originally selected content. For example, the content receiver 1201 may retrieve (from storage) the other episodes that may correspond to a particular title 1306, description 1310 and the like. Additionally or alternatively, the content receiver 1201 may retrieve the other content that may have originally been presented in a chronological order, e.g., by ascending time slots 1304.

After operation 1516, the method 1500 may proceed to operation 1518 and the additional content may be presented. The content receiver 1201 may present the additional content selectively, e.g., a single episode at a time. The method 1500 may allow for multiple shows to be grouped and presented in a variety of different manners. For example, content may be grouped by date and time but may also (or alternatively) be grouped by title 1306 and/or episode identifier 1308. This may allow the content receiver 1201 to represent the content in a chronological order, e.g., recall and present the content as it was originally displayed on the select date in the select time slots. Additionally, the content receiver 1201 may present the content based on episodes. For example, the first episode of a particular content (which may have been recorded at a later date) may be present first and a the second episode then be presented second (although it may have been recorded first).

In one embodiment, the content receiver 1201 may present content originally displayed at the 7pm time slot, then present content displayed at the 8pm time slot and so on. In another embodiment, the content receiver 1201 may present content corresponding to a particular episodic identifier 1308. This embodiment may allow for content to be presented in episodically, rather than chronologically when it was presented and/or recorded. For example, episodes of a particular show may be presented out of their original order (e.g., due to syndication, re-runs, and so on). To address this, the content receiver 1201 may be configured to record all of the episodes and then present the content in the original episode order.

Furthermore, as described in operation 1512, the method 1500 may further skip or otherwise not present content that may have already been viewed. For example, a user may have viewed content presented on a particular channel at an 8pm time slot, but actually may be viewing stored content corresponding to the 7:30pm slot. The content receiver 1201 sequentially presents content corresponding to the 9pm time slot, rather than the 8pm time slot. Therefore, a user may not have to fast-forward or otherwise manually skip the content that he or she has already viewed. Similarly, a user may have viewed a particular episode of a show, but may be viewing a prior episode, the content receiver 1201 may then skip the viewed episode and present the next episode, which may be based on episode identifier 1308 and/or previously presented date, time slot 1304 and the like.

In the present disclosure, the methods disclosed may be implemented as sets of instructions or software readable by a device. Further, it is understood that the specific order or hierarchy of operations in the methods disclosed are examples of sample approaches. In other implementations, the specific order or hierarchy of operations in the method can be rearranged while remaining within the disclosed subject matter. The accompanying method claims present elements of the various operations in a sample order, and are not necessarily meant to be limited to the specific order or hierarchy presented.

The described disclosure may be provided as a computer program product, or software, that may include a non-transitory machine-readable medium having stored thereon instructions, which may be used to program a computer system (or other electronic devices) to perform a process according to the present disclosure. A non-transitory machine-readable medium includes any mechanism for storing information in a form (e.g., software, processing application) readable by a machine (e.g., a computer). The non-transitory machine-readable medium may take the form of, but is not limited to, a magnetic storage medium (e.g., floppy diskette, video cassette, and so on); optical storage medium (e.g., CD-ROM); magneto-optical storage medium; read only memory (ROM); random access memory (RAM); erasable programmable memory (e.g., EPROM and EEPROM); flash memory; and so on.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

While the present disclosure has been described with reference to various implementations, it will be understood that these implementations are illustrative and that the scope of the disclosure is not limited to them. Many variations, modifications, additions, and improvements are possible. More generally, implementations in accordance with the present disclosure have been described in the context or particular implementations. Functionality may be separated or combined in blocks differently in various implementations of the disclosure or described with different terminology. These and other variations, modifications, additions, and improvements may fall within the scope of the disclosure as defined in the claims that follow.

## Claims

1. A method of providing access to a block of content, comprising:
determining, utilizing a content receiver (122, 902, 1201), a plurality of instances of content received over different television channels (CH1,...,CHX), and being received simultaneously by a tuner (107) from a same frequency band of a content provider (904, 1202, 1204), wherein the plurality of instances of content are scrambled in association with a single control word (CW);
receiving, at the content receiver (122, 902, 1201), a selection from a user of a first one of the plurality of instances of content; and outputting the first one of the plurality of instances of content from the content receiver (122, 902, 1201) to the presentation device (128, 906, 1203) in response to the selection;
presenting an electronic programming guide (EPG) (131) that presents a grid of a plurality of television channels, a plurality of times, and a plurality of television programs appearing on the plurality of television channels at the plurality of times;
receiving input at the content receiver (122, 902, 1201) from a user accessing an interactive feature presented within the EPG (131) to display a block list (132, 146), the interactive feature being provided based on the input highlighting or scrolling across a television channel of the plurality of television channels presented on the grid of the EPG (131);
in response to receiving input at the content receiver from the user accessing the interactive feature presented within the EPG (131), outputting the block list (132, 146) from the content receiver (122, 902, 1201) for presentation by a presentation device (128, 906, 1203);
wherein the block list (132, 146) identifies the other instances of content from the plurality of instances of content being received simultaneously by the tuner (107) on the same frequency band.

2. The method of claim 1, further comprising storing the plurality of instances of content on a storage medium (111, 926, 1206) associated with the content receiver (122, 902, 1201).

3. The method of claim 1, wherein the interactive feature comprises a pop-up (140) that is outputted for presentation on the presentation device (128, 906, 1203) within a time frame corresponding to the content in the block list (132, 146).

4. A method for providing access to content, the method comprising:
determining, utilizing a content receiver (122, 902, 1201), a plurality of instances of content received over different television channels (CH1,...,CHX), and being received simultaneously by a tuner (107) from a same frequency band of a content provider (904, 1202, 1204) broadcast or a plurality of instances of stored content received over different television channels (CH1,...,CHX) that were received simultaneously by the tuner (107) from the same frequency band of the content provider (904, 1202, 1204) broadcast, wherein the plurality of instances of content are scrambled in association with a single control word (CW);
receiving at the content receiver (122, 902, 1201) a selection from a user input of a first one of the plurality of instances of content; determining if the instance of content is available live or from a stored state;transmitting the instance of content being received by the tuner to the presentation device (128, 906, 1203) live if the program is available live; and accessing the instance of content from the plurality of instances of stored content if the program is not available live and transmitting the accessed instance of content to the presentation device (128, 906, 1203);
presenting an electronic programming guide (EPG) (131) that presents a grid of a plurality of television channels, a plurality of times, and a plurality of television programs appearing on the plurality of television channels at the plurality of times;
receiving input at the content receiver (122, 902, 1201) from a user accessing an interactive feature presented within the EPG (131) to display a block list (132, 146), the interactive feature being provided based on the input highlighting or scrolling across a television channel of the plurality of television channels presented on the grid of the EPG (131);
in response to receiving input at the content receiver from the user accessing the interactive feature presented within the EPG (131), outputting the block list (132, 146) from the content receiver (122, 902, 1201) for presentation by a presentation device (128, 906, 1203);
wherein the block list (132, 146) identifies the other instances of content from the plurality of instances of content being received simultaneously by the tuner (107) on the same frequency band or that were received simultaneously by the tuner (107) on the same frequency band and stored.

5. The method of claim 4, wherein the block list (132, 146) is configured as a plurality of channels (CH1,...,CHX) having a plurality of programs available for a selected airing time, the selected airing time corresponding to a time frame for which content has been or is scheduled to be stored as a block of stored content.

6. The method of claim 5, further comprising providing a drop down menu (134) for each instance of content available in the block list (132, 146), the menu providing access to previous episodes of the respective instance of content.

7. A system for providing access to content, the system comprising:
at least one content receiver (122, 902, 1201), comprising:
at least one processing unit (124, 962, 1205) that:
determines a plurality of instances of content received over different television channels (CH1,...,CHX), and being received simultaneously by a tuner (107) from a same frequency band of a content provider (904, 1202, 1204), wherein the plurality of instances of content are scrambled in association with a single control word (CW),
receives at the content receiver (122, 902, 1201) a selection from a user input of a first one of the plurality of instances of content;transmits the first one of the plurality of instances of content from the content receiver (122, 902, 1201) to the presentation device (128, 906, 1203) in response to the selection;
outputs for presentation an electronic programming guide (EPG) (131) that presents a grid of a plurality of television channels, a plurality of times, and a plurality of television programs appearing on the plurality of television channels at the plurality of times;
receives input at the content receiver (122, 902, 1201) from a user accessing an interactive feature presented within the EPG (131) to display a block list (132, 146), the interactive feature being provided based on the input highlighting or scrolling across a television channel of the plurality of television channels presented on the grid of the EPG (131);
in response to receiving input at the content receiver from the user accessing the interactive feature presented within the EPG (131), generates the block list (132, 146), and transmits the block list (132, 146) from the content receiver (122, 902, 1201) to a presentation device (128, 906, 1203) for presentation;
wherein the block list (132, 146) identifies the other instances of content from the plurality of instances of content being received simultaneously by the tuner (107) on the same frequency band.

8. The system of claim 7, wherein the tuner (107) is incorporated into the at least one content receiver (122, 902, 1201).

9. The system of claim 7, wherein the tuner (107) is incorporated into another content receiver (122, 902, 1201), the processing unit (124, 962, 1205) configured to communicate with the other content receiver (122, 902, 1201) and instruct the other content receiver to transmit the first one of the instances of content to the content receiver.

10. The system of claim 7, wherein the processing unit (124, 962, 1205) is configured to coordinate storage of the plurality of instances of content on a storage medium (111, 926, 1206) associated with the content receiver (122, 902, 1201).

11. The system of claim 7, wherein the processing unit (124, 962, 1205) is configured to output the block list (132, 146) overlaid onto a second one of the plurality of instances of content being output by the content receiver (122, 902, 1201).

## Patentansprüche

1. Verfahren zum Ermöglichen von Zugriff auf einen Inhaltsblock, das Folgendes aufweist:
Bestimmen, unter Nutzung eines Inhaltsempfängers (122, 902, 1201), von mehreren Inhaltsinstanzen, die über verschiedene Fernsehkanäle (CH1, ..., CHX) empfangen werden und simultan durch einen Tuner (107) aus einem selben Frequenzband eines Inhaltsanbieters (904, 1202, 1204) empfangen werden, wobei die mehreren Inhaltsinstanzen in Verbindung mit einem einzelnen Steuerwort (Control Word - CW) verschlüsselt werden;
am Inhaltsempfänger (122, 902, 1201) Empfangen einer Auswahl von einem Benutzer von einer ersten der mehreren Inhaltsinstanzen und als Reaktion auf die Auswahl Ausgeben der ersten der mehreren Inhaltsinstanzen vom Inhaltsempfänger (122, 902, 1201) an die Präsentationsvorrichtung (128, 906, 1203) ;
Präsentieren eines elektronischen Programmführers (Electronic Programming Guide - EPG) (131), der eine Tabelle mehrerer Fernsehkanäle, mehrerer Zeiten und mehrerer Fernsehsendungen, die auf den mehreren Fernsehkanälen zu den mehreren Zeiten erscheinen, präsentiert;
Empfangen einer Eingabe am Inhaltsempfänger (122, 902, 1201) von einem Benutzer, der auf eine interaktive Funktion zugreift, die im EPG (131) präsentiert wird, um eine Blockliste (132, 146) anzuzeigen, wobei die interaktive Funktion auf Basis dessen bereitgestellt wird, dass die Eingabe einen Fernsehkanal der mehreren Fernsehkanäle, die in der Tabelle des EPG (131) präsentiert werden, markiert oder darüberscrollt;
als Reaktion auf das Empfangen einer Eingabe am Inhaltsempfänger von dem Benutzer, der auf die interaktive Funktion, die im EPG (131) präsentiert wird, zugreift, Ausgeben der Blockliste (132, 146) aus dem Inhaltsempfänger (122, 902, 1201) zur Präsentation durch eine Präsentationsvorrichtung (128, 906, 1203);
wobei die Blockliste (132, 146) die anderen Inhaltsinstanzen von den mehreren Inhaltsinstanzen, die simultan durch den Tuner (107) auf demselben Frequenzband empfangen werden, identifiziert.

2. Verfahren nach Anspruch 1, das ferner das Speichern der mehreren Inhaltsinstanzen auf einem dem Inhaltsempfänger (122, 902, 1201) zugeordneten Speichermedium (111, 926, 1206) aufweist.

3. Verfahren nach Anspruch 1, wobei die interaktive Funktion ein Pop-up (140) aufweist, das zur Präsentation auf der Präsentationsvorrichtung (128, 906, 1203) innerhalb eines Zeitraums, der dem Inhalt in der Blockliste (132, 146) entspricht, ausgegeben wird.

4. Verfahren zum Ermöglichen von Zugriff auf Inhalt, wobei das Verfahren Folgendes aufweist:
Bestimmen, unter Nutzung eines Inhaltsempfängers (122, 902, 1201), von mehreren Inhaltsinstanzen, die über verschiedene Fernsehkanäle (CH1, ..., CHX) empfangen werden und simultan durch einen Tuner (107) aus einem selben Frequenzband einer Inhaltsanbieter- (904, 1202, 1204) -ausstrahlung empfangen werden, oder mehreren Instanzen von gespeichertem Inhalt, die über verschiedene Fernsehkanäle (CH1, ..., CHX) empfangen werden, die simultan durch einen Tuner (107) aus demselben Frequenzband der Inhaltsanbieter-(904, 1202, 1204) -ausstrahlung empfangen wurden, wobei die mehreren Inhaltsinstanzen in Verbindung mit einem einzelnen Steuerwort (Control Word - CW) verschlüsselt werden;
am Inhaltsempfänger (122, 902, 1201) Empfangen einer Auswahl von einer Benutzereingabe einer ersten der mehreren Inhaltsinstanzen; Bestimmen, ob die Inhaltsinstanz live oder aus einem gespeicherten Zustand verfügbar ist; Live-Übertragen der Inhaltsinstanz, die durch den Tuner empfangen wird, an die Präsentationsvorrichtung (128, 906, 1203), falls die Sendung live verfügbar ist; und Zugreifen auf die Inhaltsinstanz aus den mehreren Instanzen von gespeichertem Inhalt, falls die Sendung nicht live verfügbar ist, und Übertragen der Inhaltsinstanz, auf die zugegriffen wurde, an die Präsentationsvorrichtung (128, 906, 1203);
Präsentieren eines elektronischen Programmführers (Electronic Programming Guide - EPG) (131), der eine Tabelle mehrerer Fernsehkanäle, mehrerer Zeiten und mehrerer Fernsehsendungen, die auf den mehreren Fernsehkanälen zu den mehreren Zeiten erscheinen, präsentiert;
Empfangen einer Eingabe am Inhaltsempfänger (122, 902, 1201) von einem Benutzer, der auf eine interaktive Funktion zugreift, die im EPG (131) präsentiert wird, um eine Blockliste (132, 146) anzuzeigen, wobei die interaktive Funktion auf Basis dessen bereitgestellt wird, dass die Eingabe einen Fernsehkanal der mehreren Fernsehkanäle, die in der Tabelle des EPG (131) präsentiert werden, markiert oder darüberscrollt;
als Reaktion auf das Empfangen einer Eingabe am Inhaltsempfänger von dem Benutzer, der auf die interaktive Funktion, die im EPG (131) präsentiert wird, zugreift, Ausgeben der Blockliste (132, 146) aus dem Inhaltsempfänger (122, 902, 1201) zur Präsentation durch eine Präsentationsvorrichtung (128, 906, 1203);
wobei die Blockliste (132, 146) die anderen Inhaltsinstanzen von den mehreren Inhaltsinstanzen, die simultan durch den Tuner (107) auf demselben Frequenzband empfangen werden oder die simultan durch den Tuner (107) auf demselben Frequenzband empfangen und gespeichert wurden, identifiziert.

5. Verfahren nach Anspruch 4, wobei die Blockliste (132, 146) als mehrere Kanäle (CH1, ..., CHX) mit mehreren für eine ausgewählte Ausstrahlungszeit verfügbaren Sendungen konfiguriert ist, wobei die ausgewählte Ausstrahlungszeit einem Zeitraum entspricht, für den Inhalt zum Speichern als Block gespeicherten Inhalts eingeplant wurde oder ist.

6. Verfahren nach Anspruch 5, das ferner das Bereitstellen eines Dropdown-Menüs (134) für jede in der Blockliste (132, 146) verfügbare Inhaltsinstanz aufweist, wobei das Menü Zugriff auf vorherige Episoden der jeweiligen Inhaltsinstanz ermöglicht.

7. System zum Ermöglichen von Zugriff auf Inhalt, wobei das System Folgendes aufweist:
wenigstens einen Inhaltsempfänger (122, 902, 1201), der Folgendes aufweist:
wenigstens eine Verarbeitungseinheit (124, 962, 1205), die:
mehrere Inhaltsinstanzen bestimmt, die über verschiedene Fernsehkanäle (CH1, ..., CHX) empfangen werden und simultan durch einen Tuner (107) aus einem selben Frequenzband eines Inhaltsanbieters (904, 1202, 1204) empfangen werden, wobei die mehreren Inhaltsinstanzen in Verbindung mit einem einzelnen Steuerwort (Control Word - CW) verschlüsselt werden;
am Inhaltsempfänger (122, 902, 1201) eine Auswahl von einer Benutzereingabe von einer ersten der mehreren Inhaltsinstanzen empfängt; die erste der mehreren Inhaltsinstanzen als Reaktion auf die Auswahl vom Inhaltsempfänger (122, 902, 1201) an die Präsentationsvorrichtung (128, 906, 1203) überträgt;
einen elektronischen Programmführer (Electronic Programming Guide - EPG) (131), der eine Tabelle mehrerer Fernsehkanäle, mehrerer Zeiten und mehrerer Fernsehsendungen, die auf den mehreren Fernsehkanälen zu den mehreren Zeiten erscheinen, zur Präsentation ausgibt;
eine Eingabe am Inhaltsempfänger (122, 902, 1201) von einem Benutzer empfängt, der auf eine interaktive Funktion zugreift, die im EPG (131) präsentiert wird, um eine Blockliste (132, 146) anzuzeigen, wobei die interaktive Funktion auf Basis dessen bereitgestellt wird, dass die Eingabe einen Fernsehkanal der mehreren Fernsehkanäle, die in der Tabelle des EPG (131) präsentiert werden, markiert oder darüberscrollt;
als Reaktion auf das Empfangen einer Eingabe am Inhaltsempfänger von dem Benutzer, der auf die interaktive Funktion, die im EPG (131) präsentiert wird, zugreift, die Blockliste (132, 146) generiert und die Blockliste (132, 146) vom Inhaltsempfänger (122, 902, 1201) zu einer Präsentationsvorrichtung (128, 906, 1203) zur Präsentation überträgt;
wobei die Blockliste (132, 146) die anderen Inhaltsinstanzen von den mehreren Inhaltsinstanzen, die simultan durch den Tuner (107) auf demselben Frequenzband empfangen werden, identifiziert.

8. System nach Anspruch 7, wobei der Tuner (107) in den wenigstens einen Inhaltsempfänger (122, 902, 1201) integriert ist.

9. System nach Anspruch 7, wobei der Tuner (107) in einen anderen Inhaltsempfänger (122, 902, 1201) integriert ist, wobei die Verarbeitungseinheit (124, 962, 1205) zum Kommunizieren mit dem anderen Inhaltsempfänger (122, 902, 1201) und zum Anweisen des anderen Inhaltsempfängers zum Übertragen der ersten der Inhaltsinstanzen an den Inhaltsempfänger konfiguriert ist.

10. System nach Anspruch 7, wobei die Verarbeitungseinheit (124, 962, 1205) zum Koordinieren der Speicherung der mehreren Inhaltsinstanzen in einem dem Inhaltsempfänger (122, 902, 1201) zugeordneten Speichermedium (111, 926, 1206) konfiguriert ist.

11. System nach Anspruch 7, wobei die Verarbeitungseinheit (124, 962, 1205) zum Ausgeben der Blockliste (132, 146), einer zweiten der mehreren Inhaltsinstanzen überlagert, die durch den Inhaltsempfänger (122, 902, 1201) ausgegeben wird, konfiguriert ist.

## Revendications

1. Procédé de fourniture d'accès à un bloc de contenu, comprenant :
la détermination, à l'aide d'un récepteur de contenu (122, 902, 1201), d'une pluralité d'instances de contenu reçues sur différents canaux de télévision (CH1, ..., CHX), et reçues simultanément par un syntoniseur (107) depuis une même bande de fréquences d'un fournisseur de contenu (904, 1202, 1204), dans lequel la pluralité d'instances de contenu est brouillée en association avec un seul mot de commande (CW) ;
la réception, au niveau du récepteur de contenu (122, 902, 1201) une sélection par un utilisateur d'une première de la pluralité d'instances de contenu ; et la production en sortie de la première de la pluralité d'instances de contenu à partir du récepteur de contenu (122, 902, 1201) au dispositif de présentation (128, 906, 1203) en réponse à la sélection ;
la présentation d'un guide électronique de programmation (EPG) (131) qui présente une grille d'une pluralité de canaux de télévision, une pluralité d'heures, et une pluralité de programmes de télévision diffusés sur la pluralité de canaux de télévision à la pluralité d'heures ;
la réception au niveau du récepteur de contenu (122, 902, 1201) d'une entrée depuis un utilisateur qui accède à une fonction interactive présentée dans l'EPG (131) pour afficher une liste de blocs (132, 146), la fonction interactive étant fournie en fonction de la mise en évidence de l'entrée ou d'un défilement sur un canal de télévision de la pluralité de canaux de télévision présentés sur la grille de l'EPG (131) ;
en réponse à la réception au niveau du récepteur de contenu de l'entrée depuis l'utilisateur qui accède à la fonction interactive présentée dans l'EPG (131), la production en sortie de la liste de blocs (132, 146) par le récepteur de contenu (122, 902, 1201) en vue de sa présentation par un dispositif de présentation (128, 906, 1203) ;
dans lequel la liste de blocs (132, 146) identifie les autres instances de contenu parmi la pluralité d'instances de contenu reçues simultanément par le syntoniseur (107) sur la même bande de fréquences.

2. Procédé selon la revendication 1, comprenant en outre la mémorisation de la pluralité d'instances de contenu sur un support de mémorisation (111, 926, 1206) associé au récepteur de contenu (122, 902, 1201).

3. Procédé selon la revendication 1, dans lequel la fonction interactive comprend un menu surgissant (140) qui est produit en sortie en vue de sa présentation sur le dispositif de présentation (128, 906, 1203) dans un intervalle de temps correspondant au contenu dans la liste de blocs (132, 146).

4. Procédé de fourniture d'accès à un contenu, le procédé comprenant :
la détermination, à l'aide d'un récepteur de contenu (122, 902, 1201), d'une pluralité d'instances de contenu reçues sur différents canaux de télévision (CH1, ..., CHX), et reçues simultanément par un syntoniseur (107) depuis une même bande de fréquences d'une diffusion d'un fournisseur de contenu (904, 1202, 1204) ou d'une pluralité d'instances de contenu mémorisé reçues sur différents canaux de télévision (CH1, ..., CHX) qui ont été reçues simultanément par le syntoniseur (107) depuis la même bande de fréquences de la diffusion du fournisseur de contenu (904, 1202, 1204), dans lequel la pluralité d'instances de contenu est brouillée en association avec un seul mot de commande (CW) ;
la réception au niveau du récepteur de contenu (122, 902, 1201) d'une sélection depuis une entrée d'utilisateur d'une première de la pluralité d'instances de contenu ; la détermination que l'instance de contenu est disponible en direct ou à l'état mémorisé ; la transmission de l'instance de contenu reçue par le syntoniseur au dispositif de présentation (128, 906, 1203) en direct si le programme est disponible en direct ; et l'accès à l'instance de contenu à partir de la pluralité d'instances de contenu mémorisé si le programme n'est pas disponible en direct et la transmission de l'instance de contenu sollicitée au dispositif de présentation (128, 906, 1203) ;
la présentation d'un guide électronique de programmation (EPG) (131) qui présente une grille d'une pluralité de canaux de télévision, une pluralité d'heures, et une pluralité de programmes de télévision apparaissant sur la pluralité de canaux de télévision à la pluralité d'heures ;
la réception au niveau du récepteur de contenu (122, 902, 1201) d'une entrée depuis un utilisateur qui accède à une fonction interactive présentée dans l'EPG (131) pour afficher une liste de blocs (132, 146), la fonction interactive étant fournie en fonction de la mise en évidence de l'entrée ou d'un défilement sur un canal de télévision de la pluralité de canaux de télévision présentée sur la grille de l'EPG (131) ;
en réponse à la réception au niveau du récepteur de contenu de l'entrée depuis l'utilisateur qui accède à la fonction interactive présentée dans l'EPG (131), la production en sortie de la liste de blocs (132, 146) par le récepteur de contenu (122, 902, 1201) en vue de sa présentation par un dispositif de présentation (128, 906, 1203) ;
dans lequel la liste de blocs (132, 146) identifie les autres instances de contenu parmi la pluralité d'instances de contenu reçues simultanément par le syntoniseur (107) sur la même bande de fréquences ou qui ont été reçues simultanément par le syntoniseur (107) sur la même bande de fréquences et mémorisées.

5. Procédé selon la revendication 4, dans lequel la liste de blocs (132, 146) est configurée en tant que pluralité de canaux (CH1, ..., CHX) présentant une pluralité de programmes ayant une heure de diffusion sélectionnée, l'heure de diffusion sélectionnée correspondant à un intervalle de temps pendant lequel un contenu a été, ou a été programmé pour être, mémorisé en tant que bloc de contenu mémorisé.

6. Procédé selon la revendication 5, comprenant en outre un menu déroulant (134) pour chaque instance de contenu disponible dans la liste de blocs (132, 146), le menu fournissant l'accès à des épisodes précédents de l'instance de contenu respective.

7. Système de fourniture d'accès à un contenu, le système comprenant :
au moins un récepteur de contenu (122, 902, 1201), comprenant :
au moins une unité de traitement (124, 962, 1205) qui :
détermine une pluralité d'instances de contenu reçues sur différents canaux de télévision (CH1, ..., CHX), et reçues simultanément par un syntoniseur (107) depuis une même bande de fréquences d'un fournisseur de contenu (904, 1202, 1204), dans lequel la pluralité d'instances de contenu est brouillée en association avec un seul mot de commande (CW),
reçoit au niveau du récepteur de contenu (122, 902, 1201) une sélection depuis une entrée d'utilisateur d'une première de la pluralité d'instances de contenu ; transmet la première de la pluralité d'instances de contenu à partir du récepteur de contenu (122, 902, 1201) au dispositif de présentation (128, 906, 1203) en réponse à la sélection ;
produit en sortie en vue de sa présentation un guide électronique de programmation (EPG) (131) qui présente une grille d'une pluralité de canaux de télévision, une pluralité d'heures, et une pluralité de programmes de télévision diffusés sur la pluralité de canaux de télévision à la pluralité d'heures ;
reçoit au niveau du récepteur de contenu (122, 902, 1201) une entrée depuis un utilisateur qui accède à une fonction interactive présentée dans l'EPG (131) pour afficher une liste de blocs (132, 146), la fonction interactive étant fournie en fonction de la mise en évidence de l'entrée ou d'un défilement sur un canal de télévision de la pluralité de canaux de télévision présentée sur la grille de l'EPG (131) ;
en réponse à la réception au niveau du récepteur de contenu de l'entrée depuis l'utilisateur qui accède à la fonction interactive présentée dans l'EPG (131), génère la liste de blocs (132, 146), et transmet la liste de blocs (132, 146) depuis le récepteur de contenu (122, 902, 1201) à un dispositif de présentation (128, 906, 1203) en vue de sa présentation ;
dans lequel la liste de blocs (132, 146) identifie les autres instances de contenu parmi la pluralité d'instances de contenu reçues simultanément par le syntoniseur (107) sur la même bande de fréquences.

8. Système selon la revendication 7, dans lequel le syntoniseur (107) est incorporé dans l'au moins un récepteur de contenu (122, 902, 1201).

9. Système selon la revendication 7, dans lequel le syntoniseur (107) est incorporé dans un autre récepteur de contenu (122, 902, 1201), l'unité de traitement (124, 962, 1205) étant configurée pour communiquer avec l'autre récepteur de contenu (122, 902, 1201) et ordonner à l'autre récepteur de contenu de transmettre la première des instances de contenu au récepteur de contenu.

10. Système selon la revendication 7, dans lequel l'unité de traitement (124, 962, 1205) est configurée pour coordonner la mémorisation de la pluralité d'instances de contenu sur un support de mémorisation (111, 926, 1206) associé au récepteur de contenu (122, 902, 1201).

11. Système selon la revendication 7, dans lequel l'unité de traitement (124, 962, 1205) est configurée pour produire en sortie la liste de blocs (132, 146) superposée sur une deuxième de la pluralité d'instances de contenu produite en sortie par le récepteur de contenu (122, 902, 1201).
